# EUROPEAN PATENT SPECIFICATION

(11) **EP 4 674 715 B1**
(45) Date of publication and mention of the grant of the patent: **28.10.2026**
(21) Application number: 24211126.8
(22) Date of filing: 06.11.2024
(51) Int. Cl.: B60W 30/095, B60W 30/18, B60W 60/00, B60W 50/029

(54) **AUTONOMOUS DRIVING AND METHOD FOR OPERATING THE VEHICLE**
AUTONOMES FAHREN UND VERFAHREN ZUM BETRIEB DES FAHRZEUGS
CONDUITE AUTONOME ET PROCÉDÉ DE FONCTIONNEMENT DU VÉHICULE

(30) Priority: 01.07.2024 KR 20240086266
(43) Date of publication of application: 07.01.2026
(73) Proprietor: Hyundai Motor Company, Seoul 06797 (KR); Kia Corporation, Seocho-gu Seoul 06797 (KR); Ajou University Industry-Academic Cooperation Foundation, Suwon-si, Gyeonggi-do 16499 (KR)
(72) Inventor: PARK, Wi Han, 18280 Hwaseong-si, Gyeonggi-do (KR); MIN, Young Bin, 18280 Hwaseong-si, Gyeonggi-do (KR); PARK, Jong Sung, 18280 Hwaseong-si, Gyeonggi-do (KR); SONG, Bong Sob, 16499 Suwon-si, Gyeonggi-do (KR)
(74) Representative: Viering, Jentschura & Partner mbB Patent- und Rechtsanwälte

(56) References cited:
- EP-A1- 4 265 500
- US-A1- 2023 406 354
- US-A1- 20240 001 915

## Description

### CROSS-REFERENCE TO RELATED APPLICATIONS

This patent document claims the priority and benefits of Korean Patent Application No. 10-2024-0086266, filed on July 1, 2024.

### TECHNICAL FIELD

The present invention relates to a vehicle configured to support emergency stop within an intersection during an autonomous driving, and a method for operating the vehicle.

### BACKGROUND

Recently, advanced driver assistance systems (ADAS) have been developed to assist drivers in driving. The ADAS has multiple sub-classifications and provides convenience to the driver. Such ADAS is also called autonomous driving or ADS (Automated Driving System).

Meanwhile, an abnormality may occur in the autonomous driving system while the vehicle performs the autonomous driving. The vehicle may get into a dangerous state if appropriate measures are not taken against such abnormality in the autonomous driving system.

US 2023/406354 A1 discloses that a method of operating a vehicle includes generating a minimal risk maneuver request of the vehicle in response to a determination that there is an abnormality in a state of the vehicle, in response to the minimal risk maneuver request being generated, selecting a minimal risk maneuver type from among a plurality of minimal risk maneuver types based on the state of the vehicle, and performing a minimal risk maneuver based on the selected minimal risk maneuver type.

EP 4 265 500 A1 discloses that an automated operation device is configured: to execute a search for target stopping location candidates on the basis of location information about the vehicle and map information during the automated driving in preparation for RMF activation, and in a case in which the RMF is activated in the vicinity of an intersection; to calculate a risk factor expressing how high a risk is for the vehicle to reach a target stopping location candidate from the current location for each of a plurality of target stopping location candidates including a target stopping location candidate located on a path different from a target path of the automated driving; and to select, as the target stopping location, a target stopping location candidate with the lowest risk factor from among the plurality of target stopping location candidates.

### SUMMARY

Various embodiments of the disclosed technology relate to a vehicle configured to support emergency stop within an intersection during an autonomous driving, and a method for operating the vehicle.

Accordingly, various embodiments of the present disclosure disclose a vehicle configured to support emergency stop within an intersection during an autonomous driving.

Various embodiments of the present disclosure disclose a method for operating the vehicle that supports emergency stop within an intersection during an autonomous driving.

Advantages achieved by embodiments of the present disclosure are not necessarily limited to advantages disclosed herein, and those skilled in the art to which the present disclosure pertains may evidently understand other advantages from the following description.

A vehicle capable of autonomous driving functions according to claim 1 is disclosed. Preferred embodiments of the invention are described in the dependent claims. A vehicle capable of autonomous driving functions may include: at least one sensor configured to sense a surrounding environment of the vehicle and to generate surrounding environment information; a processor configured to monitor a state of the vehicle to generate vehicle state information and to determine whether to perform a minimum risk maneuver based on at least one among the surrounding environment information or the vehicle state information during an autonomous driving of the vehicle; and a controller configured to control operation of the vehicle according to control of the processor, wherein the processor is configured to determine a minimum risk maneuver type in response to determining to perform the minimum risk maneuver and to predict a straight stop allowance space and a risk of a collision in response to the determined minimum risk maneuver type being a straight stop within an intersection, wherein the straight stop allowance space is predicted by a lateral length of the straight stop allowance space, a first distance from the vehicle to a longitudinal starting point of the straight stop allowance space, and a second distance from the vehicle to a longitudinal end point of the straight stop allowance space.

The processor may calculate the lateral length of the straight stop allowance space based on a width of a lane and a maximum allowable range value of a lane.

The processor may calculate the first distance from the vehicle to a longitudinal starting point of the straight stop allowance space based on a first velocity of the vehicle and a maximum deceleration.

The processor may calculate the second distance from the vehicle to a longitudinal end point of the straight stop allowance space based on position information of the vehicle and a digital map.

The processor may calculate a third distance from the vehicle to the intersection based on the position information of the vehicle and the digital map.

The processor may determine whether the straight stop is possible before entering the intersection based on a result of comparing a difference between the first distance to the longitudinal starting point of the straight stop allowance space and the third distance from the vehicle to the intersection, and a reference value to each other.

The processor may determine that straight stop is possible before entering the intersection in response to the difference between the first distance to the longitudinal starting point of the straight stop allowance space and the third distance from the vehicle to the intersection being smaller than the reference value.

In response to the difference between the first distance to the longitudinal starting point of the straight stop allowance space and the third distance from the vehicle to the intersection being greater than the reference value, the processor may predict a risk of a collision while passing through the intersection, and in response to it being determined that there is no risk of the collision while passing through the intersection, the processor is configured to perform the straight stop after passing through the intersection.

The processor may calculate an intersection passage time of the vehicle based on the first velocity of the vehicle and the second distance to the longitudinal end point of the straight stop allowance space; determine whether there is a secondary vehicle capable of entering the straight stop allowance space based on traffic light information and neighboring vehicle information; determine whether there is a first secondary vehicle in a side direction of the vehicle based on neighboring vehicle information, in response to determining that the secondary vehicle is capable of entering the straight stop allowance space; calculate an entry time of the first secondary vehicle into the straight stop allowance space based on a second velocity of the first secondary vehicle and a fourth distance from the first secondary vehicle to the straight stop allowance space, in response to determining that the first secondary vehicle is in a side direction of the vehicle; and determine whether to perform the straight stop after the vehicle passes through the intersection based on a result of comparing the intersection passage time of the vehicle and the entry time of the first secondary vehicle into the straight stop allowance space to each other.

In response to the intersection passage time of the vehicle being smaller than the entry time of the first secondary vehicle into the straight stop allowance space, the processor may perform the straight stop after the vehicle passes through the intersection.

In response to the intersection passage time of the vehicle being greater than the entry time of the first secondary vehicle into the straight stop allowance space, the processor may perform the straight stop of the vehicle within the intersection.

A method for operating a vehicle according to claim 12 is disclosed. Preferred embodiments of the invention are described in the dependent claims. A method for operating a vehicle may include: obtaining surrounding environment information by sensing a surrounding environment of the vehicle during an autonomous driving of the vehicle; obtaining vehicle state information by monitoring a state of the vehicle during the autonomous driving of the vehicle; determining whether to perform a minimal risk maneuver based on at least one among the surrounding environment information or the vehicle state information during the autonomous driving of the vehicle; determining a minimum risk maneuver type, in response to the determining to perform the minimal risk maneuver; and predicting a straight stop allowance space, in response to the determining of the minimum risk maneuver type being a straight stop within an intersection, wherein the straight stop allowance space is predicted by a lateral length of the straight stop allowance space, a first distance from the vehicle to a longitudinal starting point of the straight stop allowance space, and a second distance from the vehicle to a longitudinal end point of the straight stop allowance space.

The predicting of the straight stop allowance space comprises may include: calculating the lateral length of the straight stop allowance space based on a width of a lane and a maximum allowable range value of a lane; calculating the first distance from the vehicle to a longitudinal starting point of the straight stop allowance space based on a first velocity of the vehicle and a maximum deceleration; calculating the second distance from the vehicle to a longitudinal end point of the straight stop allowance space based on position information of the vehicle and a digital map; and calculating a third distance from the vehicle to the intersection based on position information of the vehicle and the digital map.

A method embodiment may further include: after the predicting of the straight stop allowance space, determining whether the straight stop is possible before entering the intersection based on a result of comparing a difference between the first distance to the longitudinal starting point of the straight stop allowance space and the third distance from the vehicle to the intersection, and a reference value to each other.

The determining whether the straight stop is possible before entering the intersection may determine that the straight stop is possible before entering the intersection, in response to the difference between the first distance to the longitudinal starting point of the straight stop allowance space and the third distance from the vehicle to the intersection being smaller than the reference value.

A method embodiment may further include: after the determining whether the straight stop is possible before entering the intersection, predicting a risk of a collision while passing through the intersection, in response to the difference between the first distance to the longitudinal starting point of the straight stop allowance space and the third distance from the vehicle to the intersection being greater than the reference value.

The predicting the risk of the collision while passing through the intersection may include: calculating an intersection passage time of the vehicle based on the first velocity of the vehicle and the second distance to the longitudinal end point of the straight stop allowance space; determining whether there is a secondary vehicle capable of entering the straight stop allowance space based on traffic light information and neighboring vehicle information; determining whether there is a first secondary vehicle in a side direction of the vehicle based on neighboring vehicle information, in response to determining that there is the second vehicle capable of entering the straight stop allowance space; and calculating an entry time of the first secondary vehicle into the straight stop allowance space based on a second velocity of the first secondary vehicle and a fourth distance from the first secondary vehicle to the straight stop allowance space in response to determining that there is the first secondary vehicle in a side direction of the vehicle.

A method embodiment may further include: after the predicting the risk of the collision while passing through the intersection, determining whether the straight stop is possible after the vehicle passes through the intersection based on a result of comparing the intersection passage time of the vehicle and the entry time of the first secondary vehicle into the straight stop allowance space to each other.

The determining whether the straight stop is possible after the vehicle passes through the intersection may determine that the straight stop is possible after the vehicle passes through the intersection, in response to the intersection passage time of the vehicle being smaller than the entry time of the first secondary vehicle into the straight stop allowance space.

The determining whether the straight stop is possible after the vehicle passes through the intersection may perform performs the straight stop of the vehicle within the intersection, in response to the intersection passage time of the vehicle being greater than the entry time of the first secondary vehicle into the straight stop allowance space.

### BRIEF DESCRIPTION OF THE DRAWINGS

FIG. 1 is a block diagram of a vehicle according to various embodiments of the present disclosure.
FIG. 2 is a functional block diagram of a processor according to various embodiments of the present disclosure.
FIG. 3 is a view illustrating minimum risk maneuver (MRM) strategies for each vehicle state according to various embodiments of the present disclosure.
FIGS. 4A to 4B are example illustrations of determining an MRM strategy based on surrounding environment information within a specified MRC range of a vehicle according to various embodiments of the present disclosure.
FIG. 5 is an example illustration in which a priority of an MRM strategy is changed according to surrounding object information within a specified MRC range of a vehicle according to various embodiments of the present disclosure.
FIGS. 6A to 6C are example illustrations of determining whether a vehicle collides with a neighboring vehicle due to an MRM of a vehicle according to various embodiments of the present disclosure.
FIG. 7 is an example illustration of determining an MRM strategy of a vehicle considering whether the vehicle collides with a neighboring vehicle due to an MRM of a vehicle according to various embodiments of the present disclosure.
FIGS. 8A and 8B are example illustrations of calculating a distance from a vehicle according to various embodiments of the present disclosure to a neighboring vehicle.
FIG. 9 is a flowchart illustrating an operation of a vehicle according to various embodiments of the present disclosure.
FIG. 10 is a flowchart of determining an MRM strategy by a vehicle according to various embodiments of the present disclosure.
FIG. 11 is a flowchart that represents predicting a straight stop allowance space within an intersection and a risk of a collision during an autonomous driving according to various embodiments of the present disclosure.
FIGS. 12 and 13 are example illustrations of predicting a straight stop allowance space within an intersection when a final MRM strategy according to various embodiments of the present disclosure is a straight stop type.
FIGS. 14 and 15 are example illustrations representing a velocity profile when performing straight stop according to various embodiments of the present disclosure.

### DETAILED DESCRIPTION OF ILLUSTRATIVE EMBODIMENTS

Hereinafter, example embodiments of the present disclosure will be described in further detail with reference to the accompanying drawings.

The configuration and advantages of the present disclosure will be more apparent from the following detailed description. Wherever possible, the same reference numerals will be used throughout the drawings to refer to the same elements even if shown in another drawing. Detailed description of known arts can be omitted.

A vehicle may be equipped with an Automated Driving System (ADS) and may be a vehicle capable of autonomous driving. For example, by the ADS, the vehicle may perform at least one among steering, acceleration, deceleration, lane change, and stopping (or short stop) without a driver's manipulation. For example, the ADS may include at least one among Pedestrian Detection and Collision Mitigation System (PDCMS), Lane Change Decision Aid System (LCDAS), Land Departure Warning System (LDWS), Adaptive Cruise Control (ACC), Lane Keeping Assistance System (LKAS), Road Boundary Departure Prevention System (RBDPS), Curve Speed Warning System (CSWS), Forward Vehicle Collision Warning System (FVCWS), and Low Speed Following (LSF).

A driver is a human being who uses a vehicle, and may be provided with a service of an autonomous driving system.

The vehicle control authority may be an authority to control at least one component of the vehicle and/or at least one function of the vehicle. At least one function of the vehicle may include, for example, at least one among steering, acceleration, deceleration (or braking), lane change, lane detection, lateral control, obstacle recognition and distance detection, powertrain control, safe area detection, engine on/off, power on/off, and vehicle lock/unlock. The listed functions of the vehicle are merely examples for helping understanding, and embodiments of the present disclosure are not necessarily limited thereto.

A shoulder may be a space between an outermost road boundary (or a boundary of an outermost lane) in a direction in which a vehicle is traveling and a road edge (e.g., kerb, guardrail).

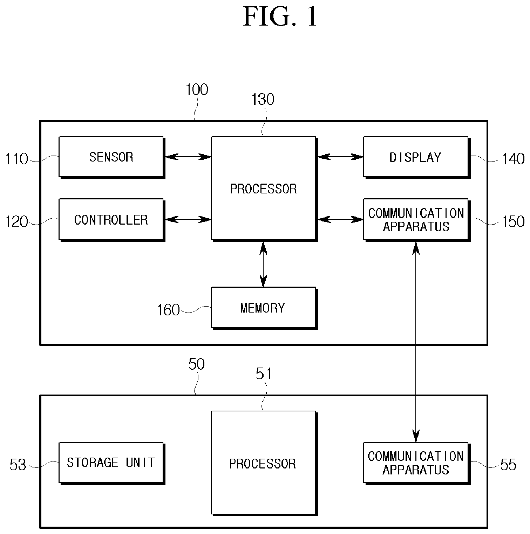

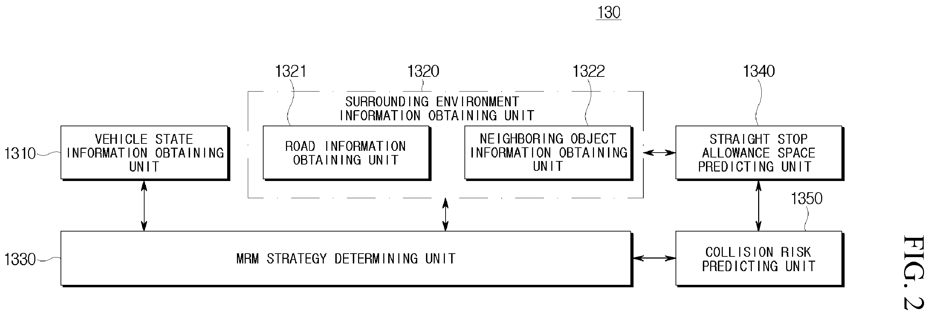

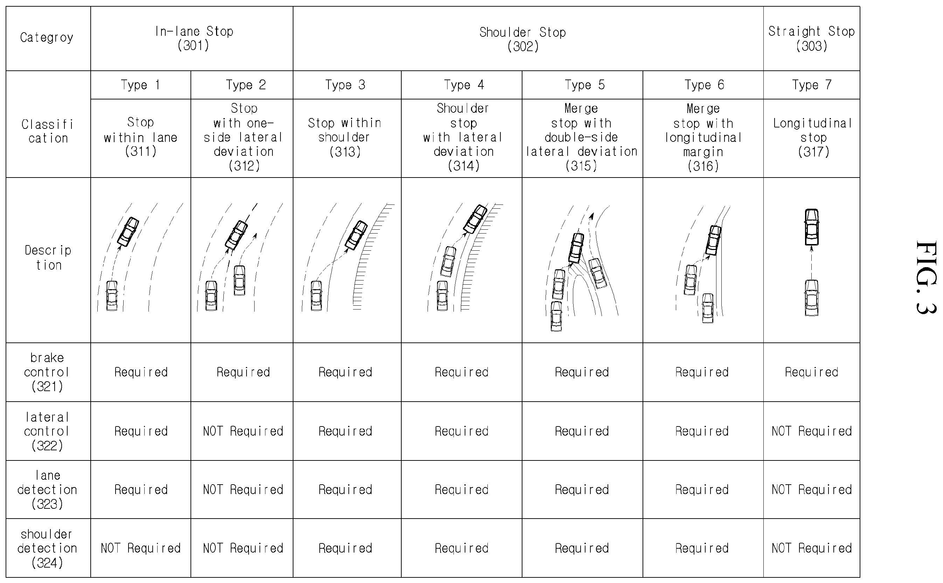

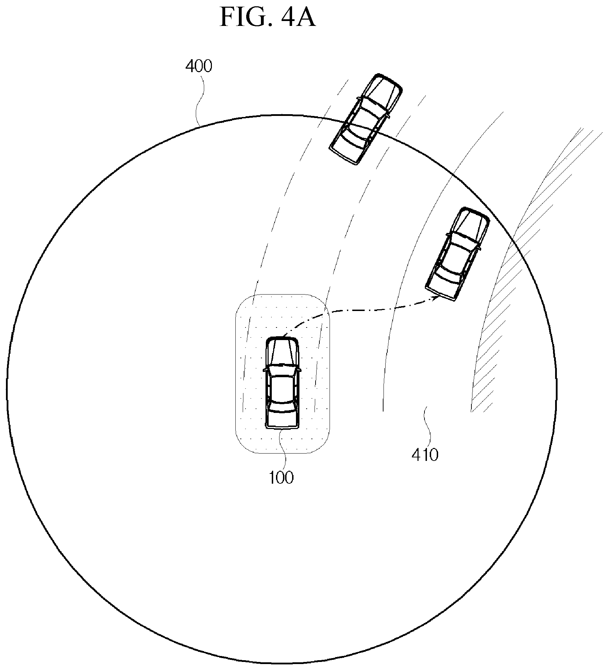

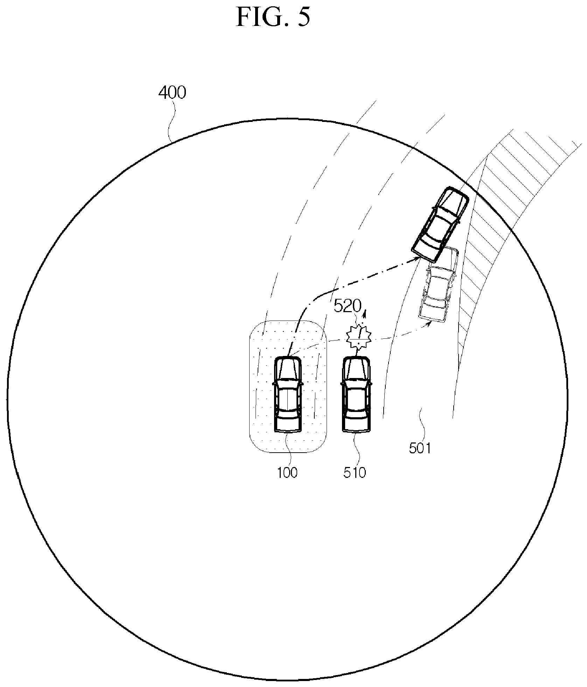

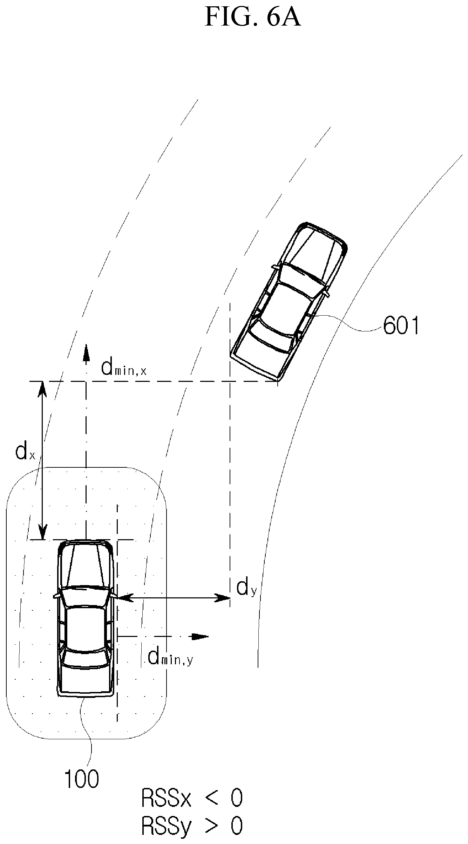

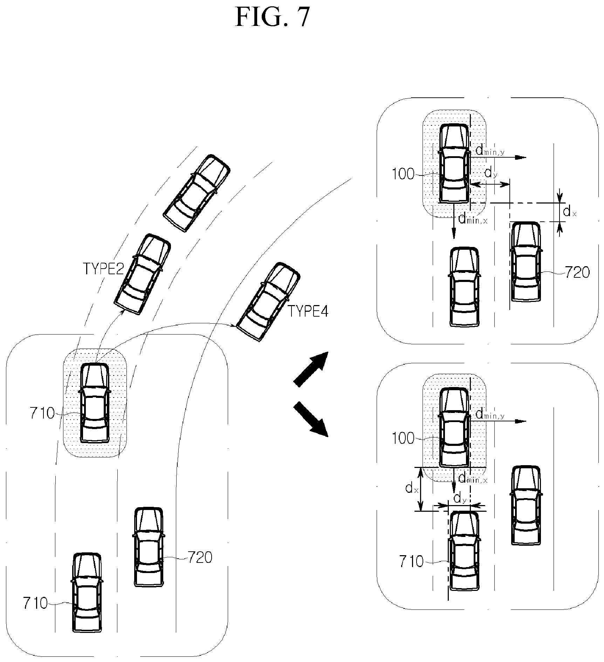

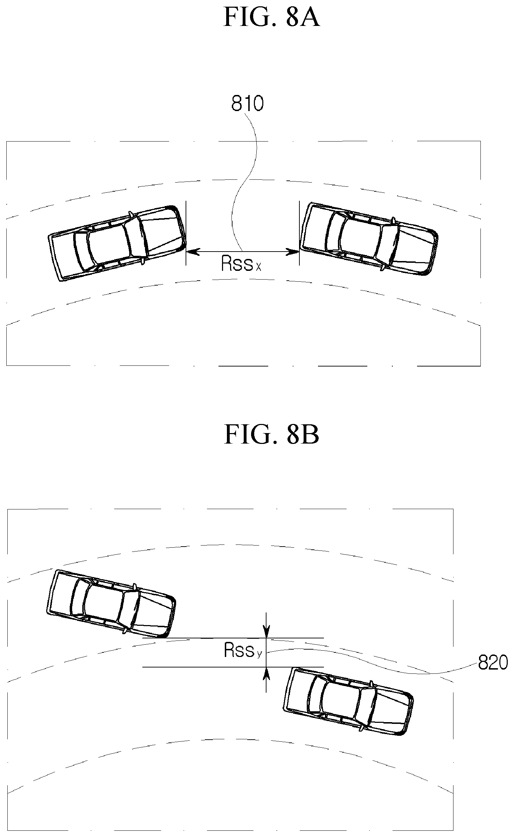

FIG. 1 is a block diagram of a vehicle according to various embodiments of the present disclosure. The configuration of the vehicle illustrated in FIG. 1 is an embodiment, and each component may be configured as one chip, one component, or one electronic circuit, or a combination of chips, components, and/or electronic circuits. According to an embodiment, some of the components illustrated in FIG. 1 may be divided into a plurality of components and configured as different chips, different components, or different electronic circuits, and some components may be combined to form one chip, one component, or one electronic circuit. According to an embodiment, some of the components illustrated in FIG. 1 may be omitted or other components not illustrated may be added. At least some of the components of FIG. 1 will be described with reference to FIGS. 2 to 8. FIG. 2 is a functional block diagram of a processor according to various embodiments of the present disclosure. FIG. 3 is a view illustrating minimum risk maneuver (MRM) strategies for each vehicle state according to various embodiments of the present disclosure. FIGS. 4a to 4b are example illustrations of determining an MRM strategy based on surrounding environment information within a specified MRC range of a vehicle according to various embodiments of the present disclosure. FIG. 5 is an example illustration in which a priority of an MRM strategy is changed according to surrounding object information within a specified MRC range of a vehicle according to various embodiments of the present disclosure. FIGS. 6A to 6C are example illustrations of determining whether a vehicle collides with a neighboring vehicle due to an MRM of a vehicle according to various embodiments of the present disclosure. FIG. 7 is an example illustration of determining an MRM strategy of a vehicle considering whether the vehicle collides with a neighboring vehicle due to an MRM of a vehicle according to various embodiments of the present disclosure. FIGS. 8A and 8B are example illustrations of calculating a distance from a vehicle according to various embodiments of the present disclosure to a neighboring vehicle.

Referring to FIG. 1, an autonomous valet parking server 50 may include a processor 51, a storage unit 53, and a communication apparatus 55, any combination of or all of which may be in plural or may include plural components thereof.

The storage unit 53 may store a digital map of a parking lot in which the autonomous valet parking is possible.

In addition, the storage unit 53 may statically or temporarily store all information necessary for the autonomous valet parking including information on vehicles parked in the parking lot, and components of the infrastructure. According to an embodiment, the information may be stored as information included in the digital map.

The processor 51 may control the autonomous valet parking of the vehicle. According to an embodiment, the processor 51 may generate all control signals for the vehicle configured to perform the autonomous valet parking, and transmit the control signals to the vehicle 100 through the communication apparatus 55 to control the vehicle 100 such that the autonomous driving can be performed. In this case, all information for the autonomous valet parking is provided in the autonomous valet parking server 500, and on behalf of the processor 130 of the vehicle 100, the processor 51 of the autonomous valet parking server 50 may generate a control command to be provided to the controller 120 and transmit the control command to the controller 120.

The communication apparatus 55 may receive vehicle information from the vehicles present in an intersection.

When there is a vehicle in which the MRM operates, the processor 51 may transmit a message notifying that the vehicle is applying the MRM to a neighboring vehicle.

According to another embodiment, the autonomous valet parking server 50 may instruct the vehicle 100 to perform the autonomous valet parking by itself. In this case, the processor 51 of the autonomous valet parking server 50 may provide the vehicle with a digital map related to a parking lot, a target position at which the vehicle 100 must park, and a guide route information along which the vehicle 100 must travel for parking. The vehicle 100 may receive the above-mentioned information from the autonomous valet parking server, and perform the autonomous valet parking by autonomously traveling by itself.

Referring to FIG. 1, the vehicle 100 may include a sensor 110, a controller 120, a processor 130, a display 140, a communication apparatus 150, and a memory 160, any combination of or all of which may be in plural or may include plural components thereof.

According to various embodiments, the sensor 110 may sense an environment around the vehicle 100 using at least one sensor and generate data related to the surrounding environment of the vehicle 100 based on the sensing result. According to an embodiment, the sensor 110 may obtain road information, information on objects around the vehicle (e.g., other vehicles, people, objects, kerbs, guardrails, lanes, obstacles) and/or position information of the vehicle based on the sensing data obtained from at least one sensor. The road information may include, for example, at least one among lane position, a shape of a lane, a color of a lane, a type of a lane, a quantity of lanes, whether a shoulder exists, or a size of a shoulder. The object around the vehicle may include, for example, at least one among a position of the object, a size of the object, a shape of the object, a distance to the object, and a relative speed to the object.

According to an embodiment, the sensor 110 may include, for example, at least one selected among a camera, a light detection and ranging (LIDAR) sensor, a radio detection and ranging (RADAR) sensor, an ultrasonic sensor, an infrared sensor, and a position measurement sensor. The listed sensors are merely examples for helping understanding, and the sensors included in the sensor 110 of the present disclosure are not necessarily limited thereto. A camera may generate image data that includes an object positioned in front, at a rear, and on a side of the vehicle 100, by capturing image around the vehicle. The lidar may generate information on an object positioned in front, on a rear side, and/or on a side of the vehicle 100 using light (or laser). The radar may generate information on an object positioned in front, on a rear side, and/or on a side of the vehicle 100 using electromagnetic waves (or radio waves). The ultrasonic sensor may generate information on an object positioned in front, on a rear side, and/or on a side of the vehicle 100 using ultrasonic waves. The infrared sensor may generate information on an object positioned in front, on a rear side, and/or on a side of the vehicle 100 using infrared rays. The position measurement sensor may measure the current position of the vehicle 100. The position measurement sensor may include at least one among a Global Positioning System (GPS) sensor, a Differential Global Positioning System (DGPS) sensor, and a Global Navigation Satellite System (GNSS) sensor. The position measurement sensor may generate position data of the vehicle based on a signal generated by at least one among a GPS sensor, DGPS sensor, and GNSS sensor.

According to various embodiments, the controller 120 may control operation of at least one component of the vehicle 100 and/or at least one function of the vehicle according to the control of the processor 130. The at least one function may be, for example, at least one among a steering function, an acceleration function (or a longitudinal acceleration function), a deceleration function (or a longitudinal deceleration function, a brake function), a lane change function, a lane detection function, an obstacle recognition and a distance detection function, a lateral control function, a powertrain control function, a safety zone detection function, an engine on/off, a power on/off, and a vehicle lock/unlock function.

According to an embodiment, the controller 120 may control at least one component of the vehicle and/or at least one function of the vehicle for autonomous driving of the vehicle 100 according to the control of the processor 130. For example, for the autonomous driving, the controller 120 may control the operation of at least one function among a steering function, an acceleration function, a deceleration function, a lane change function, a lane detection function, a lateral control function, an obstacle recognition and distance detection function, a powertrain control function, and a safe zone detection function.

According to various embodiments, the processor 130 may control the overall operation of the vehicle 100. According to an embodiment, the processor 130 may include an electrical control unit (ECU) capable of integrally controlling components in the vehicle 100. For example, the processor 130 may include a central processing unit (CPU) or a micro processing unit (MCU) capable of performing arithmetic processing.

According to various embodiments, when a specified event is generated, the processor 130 may activate the Automated Driving System (ADS) to control components in the vehicle 100 so that the vehicle performs the autonomous driving. The specified event may be generated when the autonomous driving of the driver is requested, the vehicle control authority from the driver is delegated, or a condition specified by the driver and/or designer is satisfied.

According to various embodiments, the processor 130 may determine whether normal autonomous driving is possible based on at least one among vehicle state information and surrounding environment information during the autonomous driving. When normal autonomous driving is impossible, the processor 130 may determine an MRM strategy and control the determined MRM strategy to be performed. Here, the MRM strategy may include MRM types.

According to an embodiment, the processor 130 may include a vehicle state information obtaining unit 1310, a surrounding environment information obtaining unit 1320, an MRM strategy determining unit 1330, a straight stop allowance space predicting unit 1340, and a collision risk predicting unit 1350, as illustrated in FIG. 2.

From the time when ADS is activated, the vehicle state information obtaining unit 1310 may obtain vehicle state information representing whether mechanical and/or electrical faults of components inside the vehicle occur or not, by monitoring mechanical and/or electrical states of components inside the vehicle (e.g., sensors, actuators, and the like). The vehicle state information may include information about mechanical states and/or electrical states of components inside the vehicle. For example, the vehicle state information may include information representing whether functions necessary for autonomous driving can normally operate or not according to mechanical and/or electrical states of components inside the vehicle.

The surrounding environment information obtaining unit 1320 may obtain environment information around the vehicle using the sensor 110 and/or the communication apparatus 150 from the time when the ADS is activated. The surrounding environment information obtaining unit 1320 may include a road information obtaining unit 1321 for obtaining information on a road on which the vehicle is traveling, and a neighboring object information obtaining unit 1322 for detecting an object around the vehicle from the sensor 110.

According to an embodiment, the road information obtaining unit 1321 may obtain road information of a position at which the vehicle is traveling through the sensor 110. According to an embodiment, the road information obtaining unit 1321 may obtain map information from an external device (e.g., another vehicle or a server) through the communication apparatus 150, and obtain road information of a position at which the vehicle is traveling from the map information.

According to an embodiment, the neighboring object information obtaining unit 1322 may obtain information on objects (e.g., other vehicles, people, objects, kerbs, guard rails, lanes, obstacles) around the vehicle through the sensor 110. For example, the neighboring object information obtaining unit 1322 may obtain a distance to at least one vehicle positioned on a front-lateral side, on a side, and/or on a rear-lateral side of the vehicle and a relative speed thereto.

According to an embodiment, the MRM strategy determining unit 1330 may determine whether functions necessary for the autonomous driving are normally operable based on the vehicle state information. Functions necessary for autonomous driving may include, for example, at least one among a lane detection function, a lane change function, a lateral control function, a deceleration (or brake control) function, a powertrain control function, a safe area detection function, an obstacle recognition function, and a distance sensing function. When the normal operation of at least one among the functions necessary for autonomous driving is impossible, the processor 130 may determine that normal autonomous driving is impossible.

According to an embodiment, the MRM strategy determining unit 1330 may determine whether the vehicle state is suitable for general driving conditions based on the vehicle state information. For example, the processor 130 may determine whether the vehicle's mechanical state information (e.g., tire air pressure information or engine overheat information) is suitable for general driving conditions. When the vehicle state is not suitable for general driving conditions, the processor 130 may determine that normal autonomous driving is impossible. For example, when the vehicle cannot be driven due to tire air pressure or engine overheating, the processor 130 may determine that normal autonomous driving is impossible.

According to an embodiment, the MRM strategy determining unit 1330 may determine whether an environment around the vehicle is suitable for an operation design domain (ODD) of the autonomous driving based on at least one among the surrounding environment information. The operation design domain may represent a condition for the surrounding environment in which autonomous driving normally operates. The processor 130 may determine that normal autonomous driving is impossible when the surrounding environment information of the vehicle does not match the operation design domain.

According to various embodiments, when the normal autonomous driving is impossible, the MRM strategy determining unit 1330 may determine it as a situation in which the MRM to minimize the risk of an accident is needed.

The processor 130 may select one strategy among a plurality of the MRM strategies by using the MRM strategy determining unit 1330 in a situation in which it is necessary to perform the MRM. The MRM strategies may include seven types, as illustrated in FIG. 3. For example, the MRM strategies may include an in-lane stop strategy 301 including Type 1 and Type 2, a shoulder stop strategy 302 including Type 3 to Type 6, and a straight stop strategy 303 including Type 7.

The in-lane stop strategy 301 may include stop within lane 311 of Type 1, and stop with one-side lateral deviation 312 of Type 2. The shoulder stop strategy 302 may include stop within shoulder 313 of Type 3, shoulder stop with lateral deviation 314 of Type 4, merge stop with double-side lateral deviation 315 of Type 5, and merge stop with longitudinal margin 316 of Type 6. The straight stop strategy 303 may include longitudinal stop 317 of Type 7.

The stop within lane 311 of Type 1 is a type in which the vehicle stops within a boundary of the lane in which it is traveling. For example, the stop within lane 311 may mean a type in which the vehicle stops within a boundary of a lane in which the vehicle is traveling through the brake control 321, the lateral control 322, and/or lane detection 323. The traveling lane may mean a lane in which the vehicle is traveling at a time when it is determined that the MRM is needed. The stop within lane 311 may be performed in a situation in which a function of shoulder detection 324 is impossible.

The stop with one-side lateral deviation 312 of Type 2 is a type in which the vehicle stops on a side surface of a lane in which the vehicle is traveling. For example, the stop with one-side lateral deviation 312 may mean a type in which the vehicle stops on a side surface of the lane through the brake control 321. The stop with one-side lateral deviation 312 may be performed in a situation in which at least one function among the lateral control 322, the lane detection 323, and the shoulder detection 324 is impossible.

The stop within shoulder 313 of Type 3 is a type in which the vehicle stops in a state in which the entire vehicle is positioned on a shoulder of a road. For example, the stop within shoulder 313 may mean a type in which the vehicle stops after the whole vehicle moves out of the road boundary and moves to be positioned on the shoulder through the brake control 321, the lateral control 322, the lane detection 323, and/or the shoulder detection 324.

The shoulder stop with lateral deviation 314 of Type 4 is a type in which the vehicle stops in a state in which a portion of the vehicle is positioned on a shoulder of a road. For example, the shoulder stop with lateral deviation 314 may mean a type in which the vehicle stops in a state in which a portion of the vehicle is positioned on a shoulder after moving to be out of a road boundary (or boundary of the outermost lane) through the brake control 321, the lateral control 322, the lane detection 323, and/or the shoulder detection 324.

The merge stop with double-side lateral deviation 315 of Type 5 is a type in which the vehicle stops on a shoulder of a merging point at which vehicles join from both roads. For example, the merge stop with double-side lateral deviation 315 may mean a type in which the vehicle stops in a state in which the whole vehicle, or a portion thereof moves to be positioned on a shoulder of a merging point through the brake control 321, the lateral control 322, the lane detection 323, and/or the shoulder detection 324.

The merge stop with longitudinal margin 316 of Type 6 is a type in which the vehicle stops on a shoulder of a merging point at which vehicles join from a road such as a merging point of an expressway entrance. For example, the merge stop with longitudinal margin 316 may mean a type in which the vehicle stops after the whole vehicle, or a portion thereof moves to be positioned on a shoulder of a merging point through the lateral control 322, the lane detection 323, and/or the shoulder detection 324.

The longitudinal stop 317 of Type 7 is a type in which the vehicle stops by using the brake control 321 only, which is a longitudinal deceleration function, without applying the lateral control. For example, the longitudinal stop 317 may be performed in a situation where at least one among the lateral control 322, the lane detection 323, and/or the shoulder detection 324 is impossible. For example, the longitudinal stop 317 may be performed in a situation where the lane detection is impossible, and the lateral control is impossible due to the defect of the actuator. At this instance, the detection of a potential stopping position outside the lane may mean a function of detecting a potential stopping position outside a lane, such as a shoulder or a rest area.

According to an embodiment, the priority of the above-described MRM types can be decided based on a road, the surrounding environment, and fail-operational capability that is a limit to which a vehicle tolerate a failure. For example, a priority of the MRM types corresponding to the shoulder stop strategy 302 may be set to be higher than a priority of the MRM types corresponding to the in-lane stop strategy 301 so as to minimize danger when stopping the vehicle. Further, a priority of the stop within shoulder 313 may be set to be higher than a priority of the shoulder stop with lateral deviation 314, and a priority of the stop within lane 311 may be set to be higher than a priority of the longitudinal stop 317. That is, the priority of the MRM types may be set to be reduced in the order of the stop within shoulder 313, the shoulder stop with lateral deviation 314, the stop within lane 311, and the longitudinal stop 317.

According to various embodiments, the MRM strategy determining unit 1330 may select an MRM strategy based on at least one among the vehicle state information and the surrounding environment information.

According to an embodiment, the MRM strategy determining unit 1330 may check an MRM type that can be performed among the above-described MRM types based on a function that normally operates and/or a function that cannot normally operate among functions needed for the autonomous driving based on the vehicle status information. For example, when the lateral control function operates normally, it may be determined that all the MRM types, which are the stop within lane 311, the stop with one-side lateral deviation 312, the stop within shoulder 313, the shoulder stop with lateral deviation 314, the merge stop with double-side lateral deviation 315, the merge stop with longitudinal margin 316, and the longitudinal stop 317, can be performed. As another example, when the lateral control function does not operate normally, the longitudinal stop 317 may be determined to be the MRM type that can be performed.

If there is one MRM type that can be performed based on the vehicle state information, the MRM strategy determining unit 1330 may determine the corresponding MRM type as the MRM strategy. For example, the MRM strategy determining unit 1330 can only perform the longitudinal stop 317 in a situation where the lateral control function does not operate normally, thus the longitudinal stop 317 may be determined to be the MRM strategy. As another example, when a driving lane is not detected due to a sensor defect and/or an external environment, the MRM strategy determining unit 1330 may perform the longitudinal stop 317 only, and accordingly, the longitudinal stop 317 may be determined to be the MRM strategy.

When there are a plurality of MRM types that can be performed based on the vehicle state information, the MRM strategy determining unit 1330 may determine an MRM type that can be performed within a specified minimum risk condition (MRC) range. According to an embodiment, the specified MRC range may be set and/or changed by operators and/or designers. According to an embodiment, the specified MRC range may be set differently depending on vehicle performance, a vehicle type, and/or external environmental factors (e.g., weather, time, etc.).

According to an embodiment, the MRM strategy determining unit 1330 may determine an MRM type that can be performed within the MRC range based on whether a shoulder exists within the specified MRC range. When the shoulder does not exist within the specified MRC range, the MRM strategy determining unit 1330 may determine at least one among the stop within lane 311, the stop with one-side lateral deviation 312, and the longitudinal stop 317 as the MRM type that can be performed within the MRC range.

When the shoulder exists within the specified MRC range, the MRM strategy determining unit 1330 may determine the MRM type that can be performed within the MRC range based on a size of the shoulder. If the size of the shoulder within the specified MRC range is greater than or equal to the specified size, the MRM strategy determining unit 1330 may determine the stop within shoulder 313, the shoulder stop with lateral deviation 314, the merge stop with double-side lateral deviation 315, the merge stop with longitudinal margin 316, the stop within lane 311, the stop with one-side lateral deviation 312, and the longitudinal stop 317 as the MRM types that can be performed within the MRC range. The specified size may be determined based on a size of the vehicle. When the size of the shoulder is smaller than the specified size, the MRM strategy determining unit 1330 may determine the shoulder stop with lateral deviation 314, the merge stop with double-side lateral deviation 315, the merge stop with longitudinal margin 316, the stop within lane 311, the stop with one-side lateral deviation 312, and the longitudinal stop 317 as the MRM types that can be performed within the MRC range.

According to various embodiments, the MRM strategy determining unit 1330 may select a final MRM strategy in consideration of the priority and/or neighboring object information when there are a plurality of MRM types that can be performed within the specified MRC range.

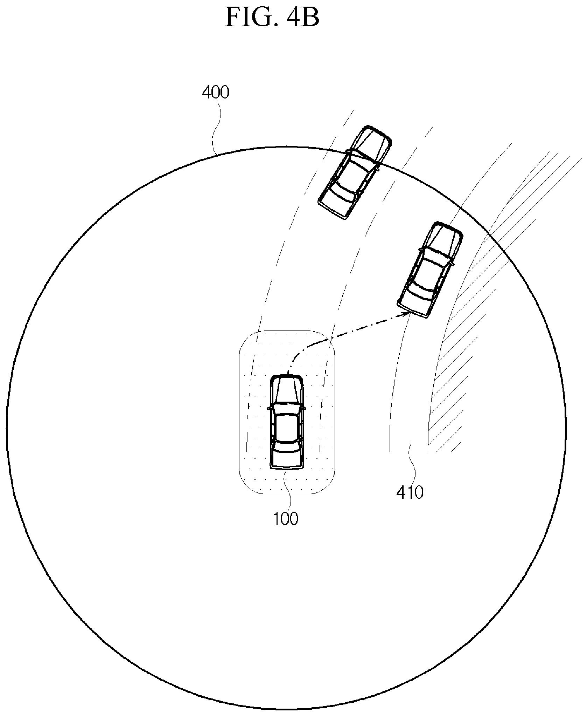

According to an embodiment, when there are a plurality of MRM types that can be performed within the specified MRC range, the MRM strategy determining unit 1330 may determine the MRM type having the highest priority as the final MRM strategy among the MRM types that can be performed within the specified MRC range. For example, as illustrated in FIG. 4a, when a width of the shoulder 410 within the specified MRC range 400 is greater than a width of the vehicle 100, the MRM strategy determining unit 1330 may determine the stop within shoulder 313 having the highest priority as the final MRM strategy among the MRM types that can be performed within the MRC range 400. As another example, as illustrated in FIG. 4b, when a width of the shoulder 420 within the specified MRC range 400 is smaller than a width of the vehicle 100, the MRM strategy determining unit 1330 may determine the shoulder stop with lateral deviation 314 having the highest priority as the final MRM strategy among the MRM types that can be performed within the specified MRC range 400.

According to an embodiment, the MRM strategy determining unit 1330 may determine the final MRM strategy by additionally taking into consideration a risk associated with performing the MRM strategy within the specified MRC range. For example, as illustrated in FIG. 5, a case is assumed, in which the shoulder 501 exists within the MRC range 400, but a width of an area adjacent to the vehicle 100 among the areas of the shoulder 501 within the MRC range 400 is greater than a width of the vehicle 100 and a width of the area positioned far from the vehicle 100 is smaller than the width of the vehicle 100. That is, a case in which the shoulder 501 having a gradually decreasing width exists within the MRC range 400 is assumed for description. In this case, the MRM strategy determining unit 1330 may select the stop within shoulder 313 having the highest priority based on the width of the shoulder 501. However, at the time of performing the stop within shoulder 313, if there is a risk of a rear-end collision (or a collision) 520 with another vehicle 510, the MRM strategy determining unit 1330 may select the shoulder stop with lateral deviation 314 having a lower priority than the stop within shoulder 313 as the final MRM strategy, since the shoulder stop with lateral deviation 314 does not have a risk of a rear-end collision with another vehicle 510.

According to an embodiment, if there are a plurality of MRM types that can be performed within the specified MRC range, the MRM strategy determining unit 1330 may select the final MRM strategy in consideration of a possibility of a collision and/or whether there is a liability for an accident. The MRM strategy determining unit 1330 may determine the possibility of a collision with the neighboring vehicles and whether there is a liability for an accident in the event of a collision based on a travel path for each of the MRM types that can be performed within the specified MRC range. With respect to the stop within shoulder 313 and/or the shoulder stop with lateral deviation 314 needing a lane change, the MRM strategy determining unit 1330 may determine the possibility of a collision and/or the liability for an accident with a vehicle positioned on a front-lateral side of the vehicle, a vehicle positioned on a side, and/or a vehicle positioned on a rear-lateral side among the neighboring vehicles. With respect to the stop within lane type that does not need a lane change, the MRM strategy determining unit 1330 may determine the possibility of a collision and/or the liability for an accident with a vehicle positioned on a rear side among the neighboring vehicles.

To determine the possibility of a collision with the neighboring vehicles and/or whether there is a liability for an accident, the MRM strategy determining unit 1330 may calculate a safety distance representing a difference between a minimum relative distance and an actual relative distance to the neighboring vehicle based on Responsibility Sensitivity Safety (RSS) model as illustrated in Mathematical Equations 1 and 2, and may determine the possibility of a collision and whether there is liability for an accident based on the calculated safety distance.$\begin{matrix}{RSS}_{x} = {d}_{x} - {d}_{min , x} \\ {RSS}_{y} = {d}_{y} - {d}_{min , y}\end{matrix}$ Equation 1

In Equation 1, RSSₓ can be the longitudinal safety distance, d_{min,x} can be the minimum longitudinal relative distance to be maintained to the neighboring vehicle, and dₓ may be the actual longitudinal relative distance between the own vehicle and the neighboring vehicle. In addition, RSS_{y} may be the lateral safety distance, d_{min,y} may be the minimum lateral relative distance to be maintained to the neighboring vehicle, and d_{y} may be the actual lateral relative distance between the own vehicle and the neighboring vehicle.

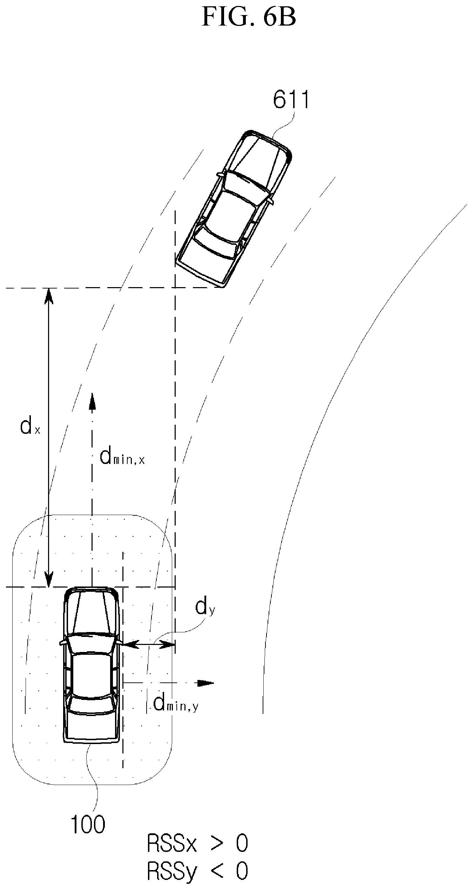

The MRM strategy determining unit 1330 may determine that the possibility of colliding with a neighboring vehicle is low (or unlikely to collide) when at least one among the longitudinal safety distance (RSSₓ) and the lateral safety distance (RSS_{y}) to the neighboring vehicle is a positive number, even though an MRM with a travel path related to the neighboring vehicle is performed. In addition, even if a collision with a neighboring vehicle occurs, the MRM strategy determining unit 1330 may determine that the vehicle has no liability for the accident. For example, as illustrated in FIG. 6a, if the longitudinal safety distance (RSSₓ) from the vehicle 100 to a right-front vehicle 601 is a negative number, but the lateral safety distance (RSS_{y}) thereto is a positive number, it may be determined that the possibility of colliding with the right-front vehicle 601 is low even if the MRM needing a lane change (e.g., the shoulder stop with lateral deviation, or the stop within shoulder) is performed, and also, even if the vehicle collides with the right-front vehicle 601, it may be determined that the own vehicle 100 has no liability for the accident. As another example, as illustrated in FIG. 6b, if the lateral safety distance (RSS_{y}) to a front vehicle 611 traveling in the same lane as the own vehicle 100 is a negative number, but the longitudinal safety distance (RSSₓ) thereto is a positive number, even if the MRM needing a lane change (e.g., the shoulder stop with lateral deviation, or the stop within shoulder) is performed, it may be determined that the possibility of a collision with the front vehicle 611 is low, and even if the vehicle collides with the front vehicle 611, it may be determined that the own vehicle 100 has no liability for the accident.

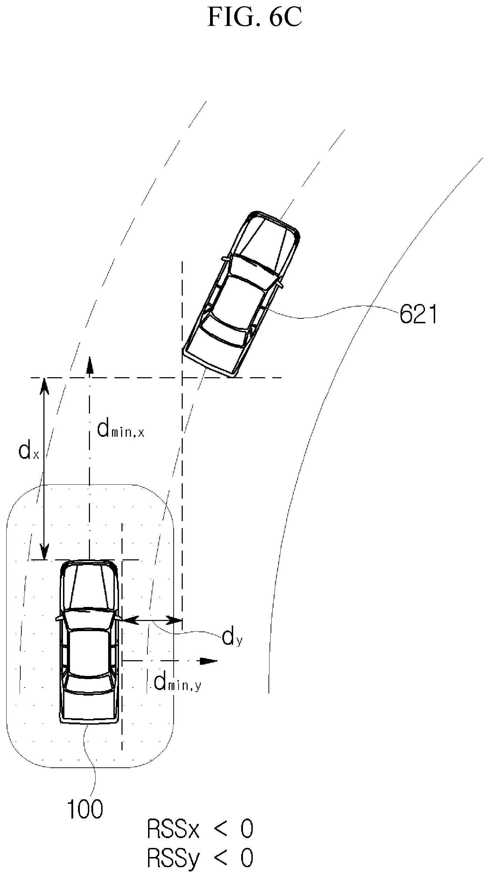

The MRM strategy determining unit 1330 may determine that the possibility of colliding with a neighboring vehicle is high (or there is the possibility to collide) when both the longitudinal safety distance (RSSₓ) and the lateral safety distance (RSS_{y}) to the neighboring vehicle are negative numbers and the MRM having a travel path related to the neighboring vehicle is performed. In addition, when the vehicle collides with the neighboring vehicle, the MRM strategy determining unit 1330 may determine that the own vehicle has the liability for the accident. For example, as illustrated in FIG. 6c, when the longitudinal safety distance (RSSₓ) and the lateral safety distance (RSS_{y}) from the own vehicle 100 to the right-front vehicle 621 are both negative numbers, it may be determined that the possibility to collide with the right-front vehicle 621 is high when the MRM needing a lane change is performed (e.g., the shoulder stop with lateral deviation, or the stop within shoulder). In addition, since the lane change of the own vehicle may be the cause of a collision with the right-front vehicle 621, the MRM strategy determining unit 240 may determine that the accident liability is in the own vehicle when a collision with the right-front vehicle 621 occurs.

The MRM strategy determining unit 1330 may select, as the final MRM, the in-lane stop having a lower priority than the stop within shoulder and the shoulder stop with lateral deviation when it is determined that the possibility of collision with a neighboring vehicle is high when the MRM needing a lane change is performed. In this case, the MRM strategy determining unit 1330 may calculate the longitudinal safety distance and lateral safety distance to the rear vehicle traveling in the same lane as the own vehicle. The MRM strategy determining unit 1330 may determine that if at least one among the longitudinal safety distance and lateral safety distance to the rear vehicle is a positive number, the possibility of a collision with the rear vehicle is low even if the in-lane stop is performed, and even if the vehicle collides therewith, the liability for the accident is not in the own vehicle, and thus, the MRM strategy determining unit 1330 may select the in-lane stop as the final MRM. For example, as illustrated in FIG. 7, the own vehicle 100 may calculate the longitudinal safety distance and the lateral safety distance to the rear-lateral vehicle 720 to perform the stop within shoulder 313 of Type 3, which has the highest priority, in a situation needing to perform the MRM. However, when both the longitudinal safety distance and the lateral safety distance to the rear-lateral vehicle 720 are negative numbers, there is a high possibility of colliding with the rear-lateral vehicle 720 due to a lane change needed in performing the stop within shoulder, and in the event of a collision with the rear-lateral vehicle 720, the own vehicle may have the liability for the collision. Therefore, since both the longitudinal safety distance and lateral safety distance between the own vehicle 100 and the rear vehicle 710 are positive numbers, the own vehicle 100 may select the stop within lane of Type 1, which has a lower priority than Type 4, as the final MRM strategy.

According to an embodiment, the longitudinal safety distance and the lateral safety distance between the own vehicle and the neighboring vehicle may be calculated as in Mathematical Equations 2 and 3 below.

The Mathematical Equation 2 below is an equation for calculating the longitudinal safety distance (Rssₓ) 810 between the own vehicle Cr and the neighboring vehicle Cf as illustrated in FIG. 8a, and the Mathematical Equation 3 is an equation for calculating the lateral safety distance (Rss_{y}) 820 between the own vehicle Cr and the neighboring vehicle Cf, as illustrated in FIG. 8b.${Rss}_{x} = {v}_{x , r} ρ + \frac{{a}_{max , accel} {ρ}^{2}}{2} + \frac{{\left({v}_{x , r}+ρ{a}_{max , accel}\right)}^{2}}{2 {a}_{min , brake}} - \frac{{v}_{x , r}^{2}}{2 {a}_{max , brake}}$ Equation 2 ${Rss}_{y} = μ + \left[\begin{matrix}\frac{2 {v}_{y , r} ρ + {{a}^{lat}}_{max , accel} {ρ}^{2}}{2} + \frac{{\left({v}_{y , r}+ρ{{a}^{lat}}_{max , accel}\right)}^{2}}{2 {{a}^{lat}}_{min , brake}} \\ - \left(\frac{2 {v}_{y , f} ρ - {{a}^{lat}}_{max , accel} {ρ}^{2}}{2}\pm \frac{{\left({v}_{y , f}-ρ{{a}^{lat}}_{max , accel}\right)}^{2}}{2 {a}_{max , brake}}\right)\end{matrix}\right]$ Equation 3

In Equations 2 and 3, ρ may mean the reaction time, µ may mean the lateral margin, a_{min,brake} may mean the minimum deceleration of the own vehicle, a_{max,aceel} may mean the maximum acceleration of the neighboring vehicle, and a_{max,brake} may mean the maximum deceleration of the neighboring vehicle.

To calculate the lateral safety distance and/or longitudinal safety distance, parameters of Mathematical Equations 2 and 3 may be set as shown in Table 1 below.

**Table 1**

| Param | Value |
|---|---|
| ρ | 0.5(s) |
| µ | 0.4(m) |
| *a_{max,brake}* | 6(m/s²) |
| *a_{min,brake}* | 8(m/s²) |
| *a_{max,accel}* | o(m/s²) |
| *a^{lat}_{min,brake}* | 4(m/s²) |
| *a^{lat}_{max,accel}* | o(m/s²) |

The parameter values of Table 1 are not limited thereto.

According to an embodiment, the MRM strategy determining unit 1330 may store, in the memory 160, the basis data for which the final MRM strategy is selected when the final MRM strategy is selected. The basis data may include at least one among presence of a shoulder within a specified MRC range, a shoulder size (e.g., length and/or width), a safe distance to a neighboring vehicle, vehicle state information of the own vehicle, and lane detection information. The MRM strategy determining unit 1330 may secure the basis for the selection of the MRM strategy having a low priority by storing the basis data for which the final MRM strategy is selected. For example, the MRM strategy determining unit 1330 may store, in the memory 160, at least one among information representing abnormal operation of the lateral control function, a steering angle, a steering speed, information representing a defect in the lane detection sensor, or sensing values of the lane detection sensor when the straight stop of Type 7 is selected as the final MRM strategy. As another example, the MRM strategy determining unit 1330 may store information on the longitudinal safety distance and the lateral safety distance to at least one neighboring vehicle calculated in the MRM strategy selection process when the stop within lane of Type 1 is selected as the final MRM strategy, even though there is a shoulder in the specified MRC range.

According to various embodiments, the processor 130 may control to stop the vehicle according to the final MRM strategy, while controlling to notify other vehicles and/or drivers of information representing that the MRM is underway. The control operation to stop the vehicle may include generating a travel trajectory for stopping the vehicle, and/or the lateral and/or longitudinal control that follows the generated travel trajectory. The processor 130 may control a display 140 to notify the driver that the vehicle is performing the MRM. As another example, the processor 130 may control the communication apparatus 150 to notify the other vehicle that the vehicle is performing the MRM. This is merely an example for helping understanding, and the method for notifying that the MRM is underway will not be limited thereto.

According to various embodiments, the processor 130 may perform the control operation for stopping the vehicle according to the determined MRM type, and determine whether the MRC is satisfied. The MRC may mean a stopped state in which the vehicle speed is 0. For example, the processor 130 may determine whether the vehicle 100 gets into a stopped state in which the speed of the vehicle 100 is 0 while performing at least one operation according to the determined final MRM type. When the vehicle 100 gets into a state where the speed is 0, the processor 130 may determine that the MRC is satisfied.

According to various embodiments, when the MRC is satisfied, the processor 130 may end the MRM operation and switch the autonomous driving system (ADS) to a standby mode or an off-state. According to an embodiment, the processor 130 may control the vehicle control authority to be transferred to the driver (or user) after switching the autonomous driving system (ADS) to the standby mode or off-state.

According to an embodiment, the processor 130 may calculate a straight stop allowance space for emergency stop through the straight stop allowance space predicting unit 1340 when the MRM type is determined to be the longitudinal stop type 317 through the MRM strategy determining unit 1330, and entering an intersection is expected based on the digital map and/or surrounding environment information.

According to an embodiment, the straight stop allowance space predicting unit 1340 may calculate a lateral length of the straight stop allowance space based on a preset width of a lane and a preset maximum allowable range of a lane. According to an embodiment, the straight stop allowance space predicting unit 1340 may calculate a distance from the vehicle to a longitudinal starting point of the straight stop allowance space based on a velocity of the vehicle and a preset maximum deceleration. According to an embodiment, the straight stop allowance space predicting unit 1340 may calculate a distance from the vehicle to a longitudinal end point of the straight stop allowance space based on position information of the vehicle and a prestored digital map. According to an embodiment, the straight stop allowance space predicting unit 1340 may calculate a distance from the vehicle to an intersection, based on position information of the vehicle and a prestored digital map. The detailed description thereof will be described below.

According to an embodiment, the collision risk predicting unit 1350 may determine whether there is an object present on the travel path of the vehicle based on the surrounding environment information generated by the surrounding environment information obtaining unit 1320. According to an embodiment, the collision risk predicting unit 1350 may calculate an intersection passage time of the vehicle based on the velocity of the vehicle and the distance to the longitudinal end point of the straight stop allowance space; determine whether there is another vehicle capable of entering the straight stop allowance space based on traffic light information and neighboring vehicle information; determine whether there is a first another vehicle in a side direction of the vehicle based on neighboring vehicle information, when it is determined that there is another vehicle capable of entering the straight stop allowance space; calculate an entry time of the first another vehicle into the straight stop allowance space based on a velocity of the first another vehicle and a distance from the first another vehicle to the straight stop allowance space, when it is determined that there is the first another vehicle in a side direction of the vehicle; and predict a risk of a collision of the vehicle when passing through an intersection based on a result of comparing the intersection passage time of the vehicle and the entry time of the first another vehicle into the straight stop allowance space to each other. The detailed description thereof will be described below.

According to various embodiments, the display 140 may visually display information related to the vehicle 100. For example, the display 140 may provide various information related to the state of the vehicle 100 to the driver of the vehicle 100 under the control of the processor 130. The various information related to the state of the vehicle may include at least one among information representing whether various components included in the vehicle and/or at least one function of the vehicle are normally operated, and information representing the driving state of the vehicle. The driving state of the vehicle may include, for example, at least one among a state in which the vehicle is autonomously driving, a state in which the MRM is underway, a state in which the MRM is completed, and a state in which the autonomous driving is ended.

According to various embodiments, the communication apparatus 150 may communicate with an external device of the vehicle 100. According to embodiments, the communication apparatus 150 may receive data from the outside of the vehicle 100 or transmit data to the outside of the vehicle 100 under the control of the processor 130. For example, the communication apparatus 150 may perform communication using a wireless communication protocol or a wired communication protocol.

According to an embodiment, the communication apparatus 150 may send or receive data with a neighboring vehicle. According to an embodiment, the communication apparatus 150 may receive vehicle information from neighboring vehicles present within the intersection.

According to an embodiment, when the processor performs the straight stop before entering the intersection or after passing through the intersection according to the MRM strategy, the processor 130 may transmit a message notifying that the vehicle is applying the MRM to the neighboring vehicle through the communication apparatus 150.

In the above-described FIG. 1, the controller 120 and the processor 130 have been described as each separate component, however, according to various embodiments, the controller 120 and the processor 130 may be integrated into one component.

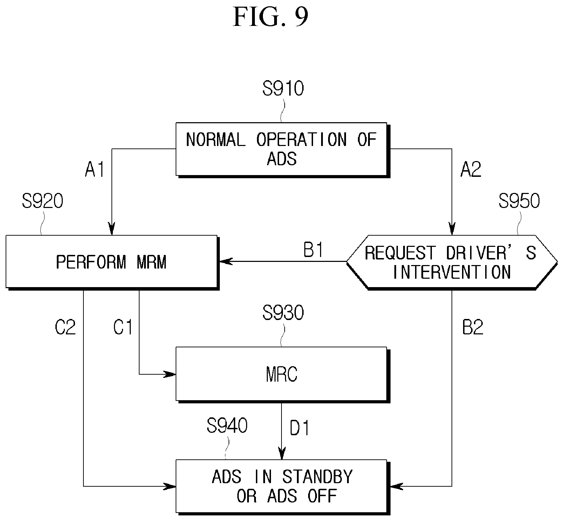

FIG. 9 is a flowchart illustrating an operation of a vehicle according to various embodiments of the present disclosure. A vehicle of FIG. 9 may be the vehicle 100 of FIG. 1.

Referring to FIG. 9, the vehicle 100 may normally operate the ADS in an operation S910.

According to an embodiment, the vehicle 100 may monitor the vehicle state and the surrounding environment while performing the autonomous driving according to the normal operation of the ADS. The vehicle 100 may detect whether the MRM is needed based on information obtained by monitoring the vehicle state and the surrounding environment. If the MRM is needed, an event A1 may be generated.

According to an embodiment, the vehicle 100 may detect whether the driver (or user) intervention is needed while performing the autonomous driving according to the normal operation of the ADS. When driver intervention is needed, the vehicle 100 may perform a Request To Intervene (RTI) through the ADS or issue a warning. The driver intervention request or warning may be an event A2. The vehicle 100 may proceed to an operation S920 when the event A1 occurs in a state in which the ADS is normally operated.

When the event A2 occurs in a state in which the ADS operates normally, the vehicle 100 may determine whether the driver intervention is detected within a specified time in an operation S650. The vehicle 100 may determine that an event B1 has occurred when no driver intervention is detected within the specified time. When the event B1 occurs, the vehicle 100 may proceed to the operation S920. The vehicle 100 may determine that an event B2 has occurred when the driver intervention is detected within a specified time. When the event B2 occurs, the vehicle 100 may proceed to an operation S940.

The vehicle 100 may perform the MRM in the operation S920. According to an embodiment, the vehicle 100 may determine the MRM type based on at least one among the vehicle state information and the surrounding environment information. The surrounding environment information may include road information and information on neighboring vehicles. The MRM types, as illustrated in FIG. 3, may include the stop within lane 311 of Type 1, the stop with one-side lateral deviation 312 of Type 2, the stop within shoulder 313 of Type 3, the shoulder stop with lateral deviation 314 of Type 4, the merge stop with double-side lateral deviation 315 of Type 5, the merge stop with longitudinal margin 316 of Type 6, and/or the longitudinal stop 317 of Type 7. The vehicle 100 may control at least one component in the vehicle to stop the vehicle according to the determined MRM type. According to an embodiment, the vehicle 100 may store the basis data used in determining the MRM type in the memory 160.

The vehicle 100 may determine whether the minimum risk requirement is satisfied as the velocity of the vehicle becomes 0 by performing the MRM in the operation S920. When the minimum risk requirement is satisfied, the vehicle 100 may determine that an event C1 has occurred and proceed to an operation S930. The vehicle 100 may determine whether the driver's intervention is detected while the MRM is underway. When the driver's intervention is detected, the vehicle 100 may determine that an event C2 has occurred and proceed to the operation S940.

In the operation S930, the vehicle 100 may maintain a state in which the minimum risk requirement is satisfied. The state in which the minimum risk requirement is satisfied may mean a state in which the vehicle is stopped. For example, the vehicle 100 may maintain a stopped state. For example, the vehicle 100 may perform control operation for maintaining the vehicle in a stopped state regardless of an inclination of a road surface at the stopped position. The vehicle 100 may determine whether an event D1 occurs while maintaining a state in which the minimum risk requirement is satisfied. An event D1 may include at least one among ADS being turned off the by the driver, and completion to transfer the vehicle control authority to the driver. When the event D1 occurs, the vehicle 100 may proceed to the operation S940.

The vehicle 100 may switch the ADS into a standby mode or an off-state in the operation S940. The vehicle 100 does not perform operation for the autonomous driving while the ADS is in a standby mode or an off-state.

The operations S910, S920, S930, and S950 described above may be in a state in which the ADS is activated, and the operation S940 may be in a state in which the ADS is inactive.

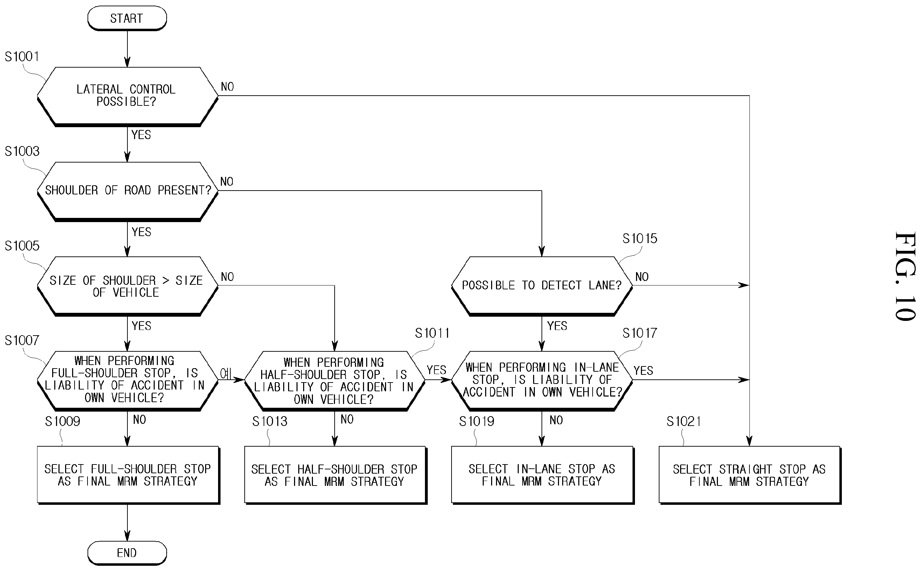

FIG. 10 is a flowchart of determining the MRM strategy by the vehicle according to various embodiments of the present disclosure. The operations of FIG. 10 may be detailed operations of the operation S920 of FIG. 9. In the following embodiment, each operation may be sequentially performed, but is not necessarily performed sequentially. For example, the sequence of each operation may be changed, and at least two operations may be performed in parallel. In addition, the following operations may be performed by the processor 130 and/or the controller 120 provided in the vehicle 100 or implemented as instructions executable by the processor 130 and/or the controller 120.

Referring to FIG. 10, the vehicle 100 may determine whether the lateral control is possible based on the vehicle state information in an operation S1001. For example, the vehicle 100 may obtain the vehicle state information representing whether a mechanical failure and/or an electrical failure of the components inside the vehicle occurs by monitoring a mechanical state and/or an electrical state of components (e.g., the sensor, the actuator, etc.) inside the vehicle. The vehicle 100 may determine whether the lateral control (or steering control) of the vehicle 100 is possible based on the vehicle state information representing a mechanical state and/or electrical state of the sensor and/or actuator.

If the lateral control is impossible, the vehicle 100 may select the straight stop as the final MRM strategy in an operation S1021. For example, as illustrated in FIG. 3, since the vehicle 100 incapable of the lateral control may only perform the straight stop, the vehicle 100 may determine the straight stop as the final MRM strategy.

If the lateral control is possible, the vehicle 100 may determine whether a shoulder of a road exists within the MRC range in an operation S1003. For example, the vehicle 100 may determine whether a shoulder exists by checking road information within an MRC range corresponding to being within a specified distance centering on the own vehicle 100. The road information within the MRC range may be obtained from sensing data of sensors (e.g., the sensor 110) provided in the vehicle 100, or from map information obtained through the communication apparatus 150.

When there is no shoulder, the vehicle 100 may determine whether lane detection is possible in an operation S1015. For example, since the vehicle 100 cannot perform the road shoulder stop strategy in a situation where a shoulder of a road does not exist, the vehicle 100 may check whether lane detection is possible To determine whether the in-lane stop is possible or not. The vehicle 100 may determine whether lane detection is possible or whether lane detection is impossible, based on the sensing value of the lane detection sensor.

When lane detection is impossible, the vehicle 100 may select the straight stop as the final MRM strategy in the operation S1021. For example, when it is impossible to detect a lane, the vehicle 100 may determine that the in-lane stop cannot be performed, and may determine the straight stop as the final MRM strategy.

If the lane detection is possible, the vehicle 100 may determine whether liability for an accident is in the own vehicle during deployment (or fulfillment) of the in-lane stop in an operation 1017. For example, the vehicle 100 may calculate a safety distance to the rear vehicle, and determine the possibility of a collision with the rear vehicle and whether to be liable for an accident based on the calculated safety distance. The rear vehicle may mean a vehicle traveling in the same lane as the own vehicle. The safety distance to the rear vehicle may include the longitudinal safety distance and the lateral safety distance as illustrated in the Mathematical Equation 1. If the calculated longitudinal safety distance and the lateral safety distance are both negative numbers, the vehicle 100 is highly likely to collide with the rear vehicle while performing the in-lane stop, and when a collision with the rear vehicle occurs, it may be determined that the liability for the accident is in the own vehicle. When at least one among the calculated longitudinal safety distance and the lateral safety distance is a positive number, the vehicle 100 is unlikely to collide with the rear vehicle during fulfillment of the in-lane stop, and when a collision with the rear vehicle occurs, it may be determined that no liability for the accident is in the own vehicle.

When it is determined that the liability for the accident is in the own vehicle during fulfillment of the in-lane stop, the vehicle 100 may proceed to the operation S1021 and select the straight stop as the final MRM strategy.

When it is determined that liability for the accident is not in the own vehicle during fulfillment of the in-lane stop, the vehicle 100 may select the in-lane stop as the final MRM strategy in an operation S1019.

If a road shoulder exists as a result of the check in the operation S1003, the vehicle 100 may determine whether a size of the shoulder is greater than a size of the vehicle in an operation S1005. For example, the vehicle 100 may compare a width of the shoulder to a width of the vehicle to determine whether the vehicle can perform the stop within shoulder or the shoulder stop with lateral deviation.

When the size of the shoulder is greater than the size of the vehicle, the vehicle 100 may determine that the stop within shoulder is possible, and the vehicle may determine whether the liability for the accident is in the own vehicle when the stop within shoulder is performed in an operation 1007. For example, the vehicle 100 may calculate a travel path for fulfillment of the stop within shoulder, and may calculate a safety distance to at least one neighboring vehicle related to the calculated travel path. The at least one neighboring vehicle related to the travel path for the stop within shoulder fulfillment may include at least one among a vehicle on a front-lateral side, a side vehicle, and/or a vehicle on a rear-lateral side. The vehicle 100 may determine the possibility of a collision with at least one neighboring vehicle and whether to be liable for the accident based on the calculated safety distance. The safety distance to at least one neighboring vehicle may include the longitudinal safety distance and the lateral safety distance as shown in the Mathematical Equation 1. If the calculated longitudinal safety distance and lateral safety distance are both negative numbers, the vehicle 100 is highly likely to collide with at least one neighboring vehicle when the stop within shoulder is performed, and may determine that the liability for the accident is in the own vehicle when a collision with the vehicle occurs. If at least one among the calculated longitudinal safety distance and the lateral safety distance is a positive number, the vehicle may determine that the possibility of the vehicle 100 to collide with at least one neighboring vehicle during fulfillment of the stop within shoulder is low, and the liability for the accident if a collision with the vehicle occurs is not in the own vehicle.

When it is determined that the liability for the accident is not in the own vehicle during fulfillment of the stop within shoulder, the vehicle 100 may select the stop within shoulder as the final MRM strategy in an operation S1009.

When it is determined that the liability for the accident is in the own vehicle when the stop within shoulder is performed, the vehicle 100 may proceed to an operation S1011 to determine whether the liability for the accident is in the own vehicle when the stop with lateral deviation is performed. For example, the vehicle 100 may calculate a travel path for fulfillment of the stop with lateral deviation, and may calculate a safety distance to at least one neighboring vehicle related to the calculated travel path. The at least one neighboring vehicle related to the travel path for fulfillment of the stop with lateral deviation may include at least one among a vehicle on a front-lateral side, a side vehicle, and/or a vehicle on a rear-lateral side. The vehicle 100 may determine the possibility of a collision with at least one neighboring vehicle and whether to be liable for the accident based on the calculated safety distance. The safety distance to at least one neighboring vehicle may include the longitudinal safety distance and the lateral safety distance as shown in the Mathematical Equation 1. If the calculated longitudinal safety distance and lateral safety distance are both negative numbers, the vehicle 100 is highly likely to collide with at least one neighboring vehicle when the stop with lateral deviation is performed, and may determine that the liability for the accident is in the own vehicle when a collision with the vehicle occurs. If at least one among the calculated longitudinal safety distance and lateral safety distance is a positive number, the vehicle 100 may determine that the possibility of the vehicle 100 to collide with at least one neighboring vehicle during fulfillment of the stop with lateral deviation is low, and the liability for the accident if a collision with the vehicle occurs is not in the own vehicle.

When it is determined that the liability for the accident is not in the own vehicle during fulfillment of the stop with lateral deviation, the vehicle 100 may select the stop with lateral deviation as the final MRM strategy in an operation S1013.

When it is determined that the liability for the accident is in the own vehicle when the stop with lateral deviation is performed, the vehicle 100 may proceed to an operation S1017.

As described above, when the vehicle according to various embodiments of the present disclosure detects a situation in which normal autonomous driving is impossible during the autonomous driving, the vehicle may determine the MRM strategy in consideration of liability for an accident per MRM type based on the vehicle state information and/or surrounding environment information, thereby safety can be improved while minimizing the risk of the vehicle.

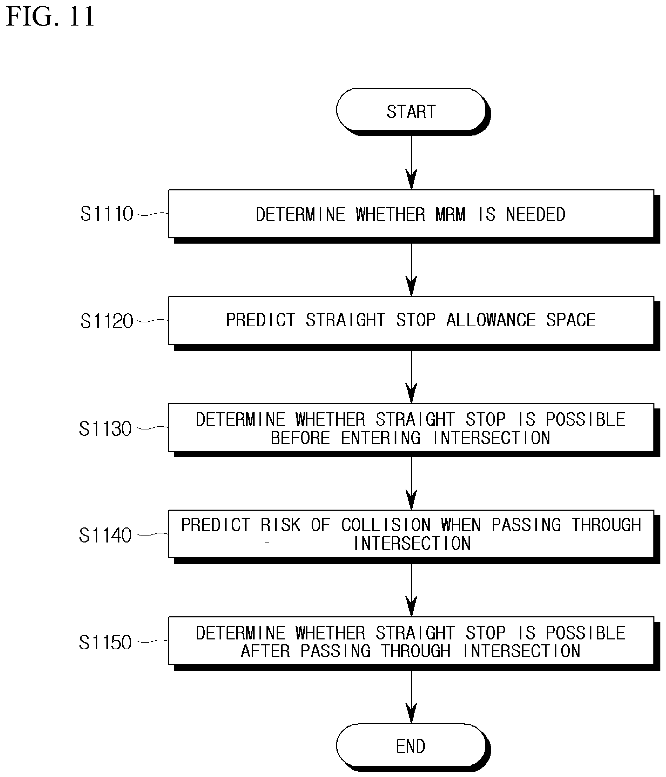

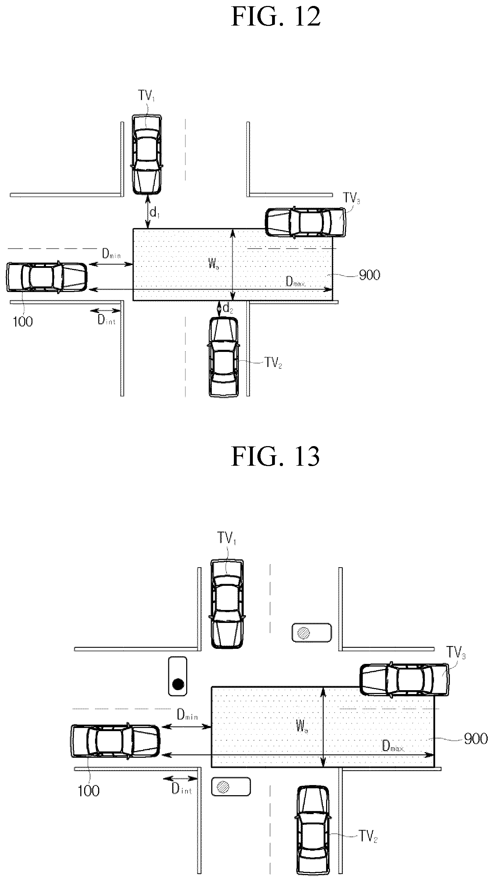

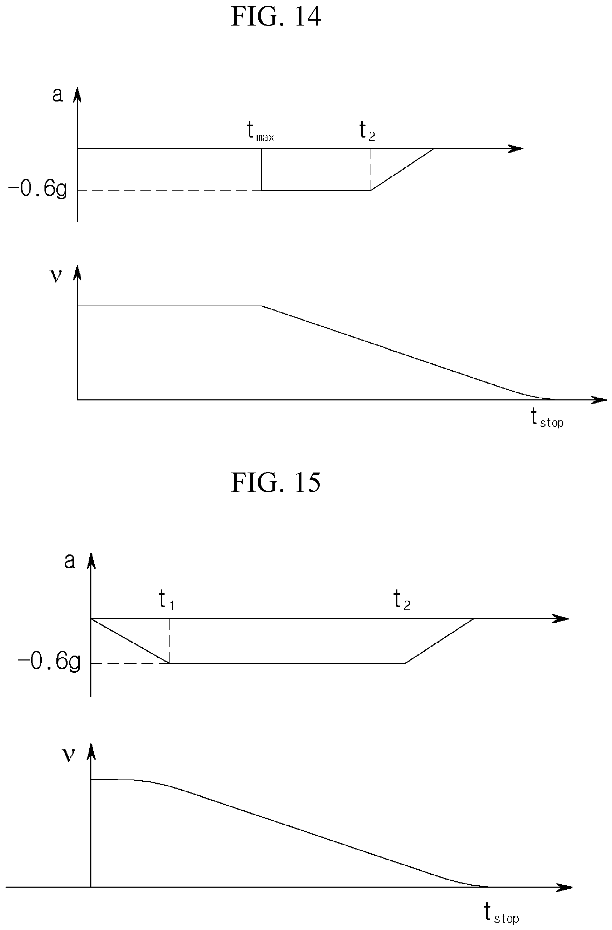

FIG. 11 is a flowchart that represents predicting the straight stop allowance space within an intersection and a risk of a collision during the autonomous driving according to various embodiments of the present disclosure. FIGS. 12 and 13 are example illustrations of predicting the straight stop allowance space within an intersection when a final MRM strategy according to various embodiments of the present disclosure is the straight stop type. FIGS. 14 and 15 are example illustrations representing a velocity profile when performing the straight stop according to various embodiments of the present disclosure.

In the city, there is no line at all in the intersection while the vehicles travels, and thus, the straight stop among the MRM strategies must be performed. In the intersection, it is necessary to minimize a risk of a collision with the other vehicle and hindrance to the traffic flow. Hereinafter, a vehicle capable of minimizing a risk of a collision with the other vehicle and hindrance to the traffic flow and a method for operating the vehicle will be described.

Referring to FIG. 11, in an operation S1110, the processor 130 may obtain surrounding environment information by detecting surrounding environment of the vehicle 100 during the autonomous driving of the vehicle 100, obtain vehicle state information by monitoring the state of the vehicle 100 during the autonomous driving of the vehicle 100, determine whether the MRM is needed based on at least one among the surrounding environment information and the vehicle state information during the autonomous driving of the vehicle 100, and determine the MRM type when it is determined that the MRM is needed.

The MRM type is an embodiment, and as illustrated in FIG. 3, the MRM type may be the longitudinal stop type 317.

In an operation S1120, the processor 130 may predict the straight stop allowance space for emergency stop when entry into the intersection is expected based on the MRM type determined in the operation S1110, and the digital map and/or the surrounding environment information.

In more detail, referring to FIG. 12, the straight stop allowance space 900 may be an area in which vehicle stopping is possible when the vehicle performs the emergency stop, and may be a virtual area including a lateral length Wₐ, a distance Dₘᵢₙ from the vehicle 100 to a longitudinal starting point, and a distance Dₘₐₓ from the vehicle 100 to a longitudinal end point. As an example, the straight stop allowance space 900 may have a quadrangular shape, but is not limited thereto, and may be set as a combination of polygonal shapes having various shapes.

In an operation S1120, the processor 130 may calculate the lateral length Wₐ of the straight stop allowance space 900 based on a preset width Wₗ of the lane and a preset maximum allowable range value of the lane, using a prestored algorithm.

The processor 130 may calculate the lateral length Wₐ of the straight stop allowance space 900, using a Mathematical Equation 4.${W}_{a} = {W}_{l} + δ$ Equation 4

In Equation 4, Wₐ can be the lateral length of the straight stop allowance space 900, Wₗ can be the preset width of the lane, and δ may be the preset maximum allowable range value of the lane. According to an embodiment, the preset maximum allowable range value of the lane may be 1m, but is not limited thereto, and may have various values according to a setting.

In the operation S1120, the processor 130 may calculate a distance from the vehicle 100 to the longitudinal starting point of the straight stop allowance space 900, based on a velocity of the vehicle 100 and a preset maximum deceleration, using the prestored algorithm.

The processor 130 may calculate the distance Dₘᵢₙ from the vehicle 100 to the longitudinal starting point of the straight stop allowance space 900, using a Mathematical Equation 5.${D}_{min} = \frac{{v}^{2}}{2 \times a}$ Equation 5

In Equation 5, Dₘᵢₙ may be the distance from the vehicle 100 to the longitudinal starting point of the straight stop allowance space 900, v may be the velocity of the vehicle 100 (own vehicle), and a may be the maximum deceleration. According to an embodiment, the preset maximum deceleration may be 0.6g, but is not limited thereto, and may have various values according to a setting.

In the operation S1120, the processor 130 may calculate the distance Dₘₐₓ from the vehicle 100 to the longitudinal end point of the straight stop allowance space 900, based on position information of the vehicle 100 and the prestored digital map, using the prestored algorithm. The processor 130 may set one point within the intersection, which is positioned opposite to a direction in which the vehicle 100 enters the intersection, as the longitudinal end point of the straight stop allowance space 900, based on position information of the end point of the intersection and the prestored digital map.

In the operation S1120, the processor 130 may calculate the distance Dᵢₙₜ from the vehicle 100 to the intersection, based on the position information of the vehicle 100 and the prestored digital map, using the prestored algorithm. The distance Dᵢₙₜ from the vehicle 100 to the intersection may be a distance from the vehicle 100 to a starting point of the intersection in a heading direction of the vehicle 100.

In an operation S1130, the processor 130 may determine whether the straight stop is possible before entering the intersection, based on a result of comparing a difference between the distance Dₘᵢₙ from the vehicle 100 to the longitudinal starting point of the straight stop allowance space 900 and the distance Dᵢₙₜ from the vehicle 100 to the intersection, and a preset reference value to each other, using the prestored algorithm. According to an embodiment, the preset reference value may mean the maximum allowable range value of the lane, and may be set as 1m, but is not limited thereto, and may be set as a combination of polygonal shapes having various shapes.

The processor 130 may calculate a difference ε between the distance Dₘᵢₙ from the vehicle 100 to the longitudinal starting point of the straight stop allowance space 900 and the distance Dᵢₙₜ from the vehicle 100 to the intersection, using a Mathematical Equation 6.$ε = {D}_{min} - {D}_{int}$ Equation 6

In Equation 6, Dₘᵢₙ may be the distance from the vehicle 100 to the longitudinal starting point of the straight stop allowance space 900, Dᵢₙₜ may be the distance from the vehicle 100 to the intersection, and ε may be the difference between the distance from the vehicle 100 to the longitudinal starting point of the straight stop allowance space 900 and the distance from the vehicle 100 to the intersection.

When the difference ε between the distance Dₘᵢₙ from the vehicle 100 to the longitudinal starting point of the straight stop allowance space 900 and the distance Dᵢₙₜ from the vehicle 100 to the intersection is smaller than the preset reference value, the processor 130 may determine that the straight stop is possible before entering the intersection. That is, when the difference ε between the distance Dₘᵢₙ from the vehicle 100 to the longitudinal starting point of the straight stop allowance space 900 and the distance Dᵢₙₜ from the vehicle 100 to the intersection is smaller than the preset maximum allowable range value of the lane (e.g., 1m), the processor 130 may determine that the risk of a collision may be minimized and the straight stop is possible before entering the intersection. The strategy for minimizing the risk of a collision which can be first considered when performing the emergency stop within the intersection is to perform the straight stop before entering the intersection.

When the difference ε between the distance Dₘᵢₙ to the longitudinal starting point of the straight stop allowance space 900 and the distance Dᵢₙₜ from the vehicle 100 to the intersection is greater than the preset reference value, the processor 130 may predict the risk of a collision when passing through the intersection.

In an operation S1140, the processor 130 may calculate an intersection passage time tₘₐₓ of the vehicle 100, based on the velocity v of the vehicle 100 and the distance Dₘₐₓ to the longitudinal end point of the straight stop allowance space 900, using the prestored algorithm.

The processor 130 may calculate the intersection passage time tₘₐₓ of the vehicle 100, using a Mathematical Equation 7.${t}_{max} = \frac{{D}_{max}}{v}$ Equation 7

In Equation 7, tₘₐₓ may be the intersection passage time of the vehicle 100 (own vehicle), Dₘₐₓ may be the distance to the longitudinal end point of the straight stop allowance space 900, and v may be the velocity of the vehicle 100 (own vehicle).

In the operation S1140, the processor 130 may determine whether there is another vehicle that may enter the straight stop allowance space 900, based on traffic light information and neighboring vehicle information, using the prestored algorithm. According to an embodiment, the vehicle 100 (own vehicle) may receive the vehicle information from the another vehicles TV₁, TV₂ and TV₃. The vehicle information may include the vehicle information of at least one or more another vehicles, and the vehicle information may include the position information and the velocity information.

In the operation S1140, the processor 130 may determine whether there is the first another vehicle in the side direction of the vehicle 100, based on the neighboring vehicle information, when it is determined that there is the another vehicle capable of entering the straight stop allowance space 900.

As illustrated in FIG. 13, there are another vehicles in a side direction and a forward direction of the vehicle 100, and if a color of the another vehicle in the side direction is green, the processor 130 may recognize the another vehicles TV₁, TV₂, and TV₃ based on the neighboring vehicle information, and may determine that the another vehicle that can enter the straight stop allowance space 900 in the side direction of the vehicle 100 are TV₁ and TV₂ based on the traffic light information.

In the operation S1140, when there are the another vehicles TV₁ and TV₂ in the side direction of the vehicle 100, the processor 130 may calculate entry times t₁ and t₂ of the first another vehicles TV₁ and TV₂ into the straight stop allowance space based on the velocities v₁ and v₂ of the first another vehicles TV₁ and TV₂ and distances d₁ and d₂ from the first another vehicles TV₁ and TV₂ to the straight stop allowance space 900, using the prestored algorithm.

Meanwhile, when there is a second another vehicle TV₃ which enters upon receiving a left turn signal in the forward direction of the vehicle 100, the processor 130 may calculate the entry time t₃ of the second another vehicle TV₃ into the straight stop allowance space, using the prestored artificial intelligence algorithm (a deep learning or mode-based prediction algorithm, etc.)

The processor 130 may calculate the entry time of the first another vehicle, entering in the side direction of the intersection entry direction of the vehicle 100, into the straight stop allowance space, using a Mathematical Equation 8.${t}_{i} = \frac{{d}_{i}}{{v}_{i}}$ Equation 8

In Equation 8, tᵢ may be the entry time of the first another vehicle TV, entering in the side direction of the intersection entry direction of the vehicle 100 (own vehicle), into the straight stop allowance space, vᵢ may be the velocity of the first another vehicle, and dᵢ may be a distance from the first another vehicle to the straight stop allowance space 900.

In the operation S1150, the processor 130 may determine whether the straight stop of the vehicle 100 is possible after the vehicle 100 passes through the intersection, based on a result of comparing the intersection passage time tₘₐₓ of the vehicle 100 and the entry time tᵢ of the first another vehicle TVᵢ into the straight stop allowance space to each other, using the prestored algorithm.

When the intersection passage time tₘₐₓ of the vehicle 100 is smaller than the entry time tᵢ of the first another vehicle TVᵢ into the straight stop allowance space, the processor 130 may determine that the risk of a collision is low and the straight stop of the vehicle 100 is possible after the vehicle passes through the intersection.

When the intersection passage time tₘₐₓ of the vehicle 100 is greater than the entry time tᵢ of the first another vehicle TVᵢ into the straight stop allowance space, the processor 130 may determine that the risk of a collision with the first another vehicle TVᵢ, entering from the side, is high and may perform the straight stop of the vehicle 100 within the intersection. When the straight stop is impossible before entering the intersection, the strategy for minimizing the risk of a collision is performing the straight stop after passing through the intersection, or performing the straight stop within the intersection by predicting the risk of a collision.

According to an embodiment, if the traffic light is changed during the intersection passage time tₘₐₓ of the vehicle 100, the processor 130 may reflect the time when the traffic light change has occurred, and adjust the entry time tᵢ of the first another vehicle TVᵢ into the straight stop allowance space.

The processor 130 may perform the straight stop before entering the intersection or after passing through the intersection, based on the prestored deceleration profile algorithm.

Referring to FIG. 14, according to an embodiment, the processor 130 may complete vehicle stopping by decelerating the vehicle when the vehicle 100 reaches the intersection passage time tₘₐₓ. That is, the processor 130 may complete vehicle stopping by not decelerating the vehicle during the passage of the intersection, but by decelerating the vehicle when reaching the intersection passage time tₘₐₓ of the vehicle. In this case, as illustrated in FIG. 15, the processor 130 may decelerate the vehicle using the maximum deceleration (e.g., -0.6g) during passage of the intersection so as to minimize the anxiety of the driver due to late stopping even after the vehicle passes through the intersection.

Referring to FIG. 15, according to an embodiment, the processor 130 may perform the straight stop after the vehicle passes through the intersection, using the prestored optimized deceleration profile algorithm, which performs deceleration when the vehicles passes through the intersection.

The correlations between the intersection passage time tₘₐₓ of the vehicle 100, the stopping completion time tₛₜₒₚ of the vehicle 100, and an entry time tᵢ of the first another vehicle TVᵢ into the straight stop allowance space may be defined as the Mathematical Equation 9.${t}_{max} < {t}_{stop} < {t}_{i}$ Equation 9

In Equation 9, when the correlations between the intersection passage time tₘₐₓ of the vehicle 100, the stopping completion time tₛₜₒₚ of the vehicle 100, and the entry time tᵢ of the first another vehicle TVᵢ into the straight stop allowance space are satisfied, the anxiety of the driver may be minimized by adjusting time required for the straight stop after the intersection passage of the vehicle 100 within the time constraints in which a collision with a neighboring vehicle does not occur.

According to an embodiment, the processor 51 of the autonomous valet parking server 50 may determine whether the MRM is required based on at least one among the surrounding environment information and the vehicle state information during the autonomous driving, and when it is determined that the MRM is needed, the processor 51 may determine the MRM type.

According to an embodiment, the processor 51 of the autonomous valet parking server 50 may predict the straight stop allowance space for the emergency stop when the intersection entry is expected based on the determined MRM type, the digital map, and/or the surrounding environment information. The processor 51 of the autonomous valet parking server 50 may calculate the lateral length Wₐ of the straight stop allowance space 900 based on the preset width Wₗ of the lane and the preset maximum allowance range value of the lane, using the prestored algorithm.

According to an embodiment, the processor 51 of the autonomous valet parking server 50 may calculate the distance Dₘᵢₙ from the vehicle 100 to the longitudinal starting point of the straight stop allowance space 900 based on the velocity of the vehicle 100 and the preset maximum deceleration, using the prestored algorithm.

According to an embodiment, the processor 51 of the autonomous valet parking server 50 may calculate the distance Dₘₐₓ from the vehicle 100 to the longitudinal end point of the straight stop allowance space based on the position information of the vehicle 100 and the prestored digital map, using the prestored algorithm.

According to an embodiment, the processor 51 of the autonomous valet parking server 50 may calculate the distance Dᵢₙₜ from the vehicle 100 to the intersection based on the position information of the vehicle 100 and the prestored digital map, using the prestored algorithm.

According to an embodiment, the processor 51 of the autonomous valet parking server 50 may determine whether the straight stop is possible before the vehicle enters the intersection, based on the result of comparing the difference between the distance Dₘᵢₙ to the longitudinal starting point of the straight stop allowance space and the distance Dᵢₙₜ from the vehicle 100 to the intersection, and the preset reference value to each other, using the prestored algorithm.

According to an embodiment, the processor 51 of the autonomous valet parking server 50 may calculate the intersection passage time tₘₐₓ of the vehicle 100 based on the velocity v of the vehicle 100 and the distance Dₘₐₓ from the vehicle 100 to the longitudinal end point of the straight stop allowance space 900, using the prestored algorithm.

According to an embodiment, the processor 51 of the autonomous valet parking server 50 may determine whether there is another vehicle that may enter the straight stop allowance space 900, based on the traffic light information and the neighboring vehicle information, using the prestored algorithm.

According to an embodiment, the processor 51 of the autonomous valet parking server 50 may determine whether there is the first another vehicle in the side direction of the vehicle 100, based on the neighboring vehicle information, when it is determined that there is another vehicle that may enter the straight stop allowance space 900.

According to an embodiment, the processor 51 of the autonomous valet parking server 50 may determine whether the straight stop is possible after the vehicle passes through the intersection, based on the result of comparing the intersection passage time tₘₐₓ of the vehicle 100 and the entry time tᵢ of the first another vehicle TVᵢ into the straight stop allowance space to each other, using the prestored algorithm.

The operation of the processor 51 of the autonomous valet parking server 50 may be the same as that of the processor 130 of the vehicle 100, therefore, the detailed description thereof will be omitted.

As described above, the vehicle according to various embodiments of the present disclosure may perform the straight stop before entering the intersection by predicting the straight stop allowance space when the straight stop is needed according to the MRM strategy during the autonomous driving, and may perform the straight stop after passing through the intersection or perform the straight stop within the intersection by predicting the risk of a collision. In addition, the vehicle according to various embodiments of the present disclosure may predict the straight stop allowance space when the straight stop is needed according to the MRM strategy during the autonomous driving and may stop according to the optimized deceleration profile. In addition, the vehicle according to various embodiments of the present disclosure may perform the straight stop among the stopping strategies that minimize the risk of a collision with a neighboring vehicle safely when the normal driving is difficult in the downtown during the autonomous driving of a level 3 or higher.

The vehicle according to various embodiments of the present disclosure may minimize the risk of a collision with the other vehicle and hindrance to the traffic flow by performing vehicle stopping when the stopping is possible before entering the intersection. Further, the vehicle according to various embodiments of the present disclosure may minimize the risk of a collision with the other vehicle and hindrance to the traffic flow by predicting the risk of a collision with a neighboring vehicle that is likely to enter the straight stop allowance space and adjusting the velocity profile of the own vehicle.

In one or more example embodiments, the functions described may be implemented in hardware, software, firmware, or any combination thereof. If implemented in software, the functions may be stored on or transmitted over as one or more instructions or code on a computer-readable medium. Computer-readable media may include both computer storage media and communication media including any medium that facilitates transfer of a computer program from one place to another. A storage media may be any available media that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer.

When embodiments are implemented in program code or code segments, it may be appreciated that a code segment can represent a procedure, a function, a subprogram, a program, a routine, a subroutine, a module, a software package, a class, or any combination of instructions, data structures, or program statements. A code segment can be coupled to another code segment or a hardware circuit by passing and/or receiving information, data, arguments, parameters, or memory contents. Information, arguments, parameters, data, etc. can be passed, forwarded, or transmitted using any suitable way including memory sharing, message passing, token passing, network transmission, etc. Additionally, in some aspects, the steps and/or actions of a method or algorithm can reside as one or any combination or set of codes and/or instructions on a machine readable medium and/or computer readable medium, which can be incorporated into a computer program product.

For a software implementation, the techniques described herein can be implemented with modules (e.g., procedures, functions, and so on) that perform the functions described herein. The software codes can be stored in memory units and executed by processors. The memory unit can be implemented within the processor or external to the processor, in which case it can be communicatively coupled to the processor via various ways.

For a hardware implementation, the processing units can be implemented within one or more application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, other electronic units designed to perform the functions described herein, or a combination thereof.

What has been described above includes examples of one or more embodiments. Furthermore, to the extent that the term "includes" is used in either the detailed description or the claims, such term is intended to be inclusive in a manner similar to the term "comprising" as "comprising" is interpreted when employed as a transitional word in a claim.

As used herein, the term to "infer" or "inference" may refer generally to the process of reasoning about or inferring states of the system, environment, and/or user from a set of observations as captured via events and/or data. Inference can be employed to identify a specific context or action, or can generate a probability distribution over states, for example. The inference can be probabilistic-that is, the computation of a probability distribution over states of interest based on a consideration of data and events. Inference can also refer to techniques employed for composing higher-level events from a set of events and/or data. Such inference results in the construction of new events or actions from a set of observed events and/or stored event data, whether or not the events are correlated in close temporal proximity, and whether the events and data come from one or several event and data sources.

Furthermore, as used in this application, the terms "component," "module," "system," and the like may refer to a computer-related entity, either hardware, firmware, a combination of hardware and software, software, or software in execution. For example, a component can be, but is not limited to being, a process running on a processor, a processor, an object, an executable, a thread of execution, a program, and/or a computer. By way of illustration, both an application running on a computing device and the computing device can be a component. One or more components can reside within a process and/or thread of execution and a component can be localized on one computer and/or distributed between two or more computers. In addition, these components can execute from various computer readable media having various data structures stored thereon. The components can communicate by way of local and/or remote processes such as in accordance with a signal having one or more data packets (e.g., data from one component interacting with another component in a local system, distributed system, and/or across a network such as the Internet with other systems by way of the signal).

## Claims

1. A vehicle (100) capable of autonomous driving functions, the vehicle (100) comprising:
at least one sensor (110) configured to sense a surrounding environment of the vehicle (100) and to generate surrounding environment information;
a processor (130) configured to monitor a state of the vehicle (100) to generate vehicle state information and to determine whether to perform a minimum risk maneuver based on at least one among the surrounding environment information or the vehicle state information during an autonomous driving of the vehicle (100); and
a controller (120) configured to control operation of the vehicle (100) according to control of the processor (130), wherein the processor (130) is configured to determine a minimum risk maneuver type in response to determining to perform the minimum risk maneuver and to predict a straight stop allowance space (900) and a risk of a collision in response to the determined minimum risk maneuver type being a straight stop within an intersection,
wherein the straight stop allowance space (900) is predicted by a lateral length of the straight stop allowance space (900), a first distance (Dmin) from the vehicle (100) to a longitudinal starting point of the straight stop allowance space (900), and a second distance (Dmax) from the vehicle (100) to a longitudinal end point of the straight stop allowance space (900).

2. The vehicle (100) of claim 1, wherein the processor (130) is configured to calculate the lateral length of the straight stop allowance space (900) based on a width of a lane and a maximum allowable range value of a lane.

3. The vehicle (100) of claim 1 or 2, wherein the processor (130) is configured to calculate the first distance (Dmin) from the vehicle (100) to a longitudinal starting point of the straight stop allowance space (900) based on a first velocity of the vehicle (100) and a maximum deceleration.

4. The vehicle (100) of claim 3, wherein the processor (130) is configured to calculate the second distance (Dmax) from the vehicle (100) to a longitudinal end point of the straight stop allowance space (900) based on position information of the vehicle (100) and a digital map.

5. The vehicle (100) of claim 4, wherein the processor (130) is configured to calculate a third distance (Dint) from the vehicle (100) to the intersection based on the position information of the vehicle (100) and the digital map.

6. The vehicle (100) of claim 5, wherein the processor (130) is configured to determine whether the straight stop is possible before entering the intersection based on a result of comparing a difference between the first distance (Dmin) to the longitudinal starting point of the straight stop allowance space (900) and the third distance (Dint) from the vehicle (100) to the intersection, and a reference value to each other.

7. The vehicle (100) of claim 6, wherein in response to the difference between the first distance (Dmin) to the longitudinal starting point of the straight stop allowance space (900) and the third distance (Dint) from the vehicle (100) to the intersection being smaller than the reference value, the processor (130) is configured to determine that the straight stop is possible before entering the intersection.

8. The vehicle (100) of claim 6 or 7, wherein in response to the difference between the first distance (Dmin) to the longitudinal starting point of the straight stop allowance space (900) and the third distance (Dint) from the vehicle (100) to the intersection being greater than the reference value, the processor (130) is configured to predict a risk of a collision while passing through the intersection, and in response to it being determined that there is no risk of the collision while passing through the intersection, the processor (130) is configured to perform the straight stop after passing through the intersection.

9. The vehicle (100) of one of claims 4-8, wherein the processor (130) is configured to:
calculate an intersection passage time of the vehicle (100) based on the first velocity of the vehicle (100) and the second distance (Dmax) to the longitudinal end point of the straight stop allowance space (900);
determine whether there is a secondary vehicle capable of entering the straight stop allowance space (900) based on traffic light information and neighboring vehicle information;
determine whether there is a first secondary vehicle in a side direction of the vehicle (100) based on neighboring vehicle information, in response to determining that the secondary vehicle is capable of entering the straight stop allowance space (900);
calculate an entry time of the first secondary vehicle into the straight stop allowance space (900) based on a second velocity of the first secondary vehicle and a fourth distance from the first secondary vehicle to the straight stop allowance space (900), in response to determining that the first secondary vehicle is in a side direction of the vehicle (100); and
determine whether to perform the straight stop after the vehicle (100) passes through the intersection based on a result of comparing the intersection passage time of the vehicle (100) and the entry time of the first secondary vehicle into the straight stop allowance space (900) to each other.

10. The vehicle (100) of claim 9, wherein in response to the intersection passage time of the vehicle (100) being smaller than the entry time of the first secondary vehicle into the straight stop allowance space (900), the processor (130) is configured to perform the straight stop after the vehicle (100) passes through the intersection.

11. The vehicle (100) of claim 9 or 10, wherein in response to the intersection passage time of the vehicle (100) being greater than the entry time of the first secondary vehicle into the straight stop allowance space (900), the processor (130) is configured to perform the straight stop of the vehicle (100) within the intersection.

12. A method for operating a vehicle (100), comprising:
obtaining surrounding environment information by sensing a surrounding environment of the vehicle (100) during an autonomous driving of the vehicle (100);
obtaining vehicle state information by monitoring a state of the vehicle (100) during the autonomous driving of the vehicle (100);
determining whether to perform a minimum risk maneuver based on at least one among the surrounding environment information or the vehicle state information during the autonomous driving of the vehicle (100);
determining a minimum risk maneuver type, in response to the determining to perform the minimum risk maneuver; and
predicting a straight stop allowance space (900), in response to the determining of the minimum risk maneuver type being a straight stop within an intersection,
wherein the straight stop allowance space (900) is predicted by a lateral length of the straight stop allowance space (900), a first distance (Dmin) from the vehicle (100) to a longitudinal starting point of the straight stop allowance space (900), and a second distance (Dmax) from the vehicle (100) to a longitudinal end point of the straight stop allowance space (900).

13. The method of claim 12, further comprising:
after the predicting of the straight stop allowance space (900), determining whether the straight stop is possible before entering the intersection based on a result of comparing a difference between the first distance (Dmin) to the longitudinal starting point of the straight stop allowance space (900) and a third distance (Dint) from the vehicle (100) to the intersection, and a reference value to each other.

14. The method of claim 13, further comprising, after the determining whether the straight stop is possible before entering the intersection, predicting a risk of a collision while passing through the intersection, in response to the difference between the first distance (Dmin) to the longitudinal starting point of the straight stop allowance space (900) and the third distance (Dint) from the vehicle (100) to the intersection being greater than the reference value.

15. The method of claim 14, further comprising, after the predicting the risk of the collision while passing through the intersection, determining whether the straight stop is possible after the vehicle (100) passes through the intersection based on a result of comparing an intersection passage time of the vehicle (100) and an entry time of a first secondary vehicle into the straight stop allowance space (900) to each other.

## Patentansprüche

1. Fahrzeug (100), das zu Autonomes-Fahren-Funktionen fähig ist, wobei das Fahrzeug (100) aufweist:
mindestens einen Sensor (110), der konfiguriert ist, um eine Umgebung des Fahrzeugs (100) zu erfassen und Umgebungsinformationen zu erzeugen,
einen Prozessor (130), der konfiguriert ist, um einen Zustand des Fahrzeugs (100) zu überwachen, um Fahrzeugzustandsinformationen zu erzeugen und basierend auf mindestens einem von den Umgebungsinformationen oder den Fahrzeugzustandsinformationen während eines autonomen Fahrens des Fahrzeugs (100) zu ermitteln, ob ein Minimales-Risiko-Manöver durchzuführen ist, und
eine Steuereinrichtung (120), die konfiguriert ist, um einen Betrieb des Fahrzeugs (100) gemäß einer Steuerung des Prozessors (130) zu steuern, wobei der Prozessor (130) konfiguriert ist, um als Reaktion auf das Ermitteln, dass das Minimales-Risiko-Manöver durchzuführen ist, einen Minimales-Risiko-Manöver-Typ zu ermitteln, und um als Reaktion darauf, dass der ermittelte Minimales-Risiko-Manöver-Typ ein geradliniges Anhalten innerhalb einer Kreuzung ist, einen Geradliniges-Anhalten-Sicherheitsraum (900) und ein Kollisionsrisiko vorherzusagen,
wobei der Geradliniges-Anhalten-Sicherheitsraum (900) durch eine seitliche Länge des Geradliniges-Anhalten-Sicherheitsraums (900), eine erste Distanz (Dmin) von dem Fahrzeug (100) zu einem Längsstartpunkt des Geradliniges-Anhalten-Sicherheitsraums (900) und eine zweite Distanz (Dmax) von dem Fahrzeug (100) zu einem Längsendpunkt des Geradliniges-Anhalten-Sicherheitsraums (900) vorhergesagt wird.

2. Fahrzeug (100) gemäß Anspruch 1, wobei der Prozessor (130) konfiguriert ist, um die seitliche Länge des Geradliniges-Anhalten-Sicherheitsraums (900) basierend auf einer Breite einer Fahrspur und einem maximal zulässigen Bereichswert einer Fahrspur zu berechnen.

3. Fahrzeug (100) gemäß Anspruch 1 oder 2, wobei der Prozessor (130) konfiguriert ist, um die erste Distanz (Dmin) vom Fahrzeug (100) zu einem Längsstartpunkt des Geradliniges-Anhalten-Sicherheitsraums (900) basierend auf einer ersten Geschwindigkeit des Fahrzeugs (100) und einer maximalen Verzögerung zu berechnen.

4. Fahrzeug (100) gemäß Anspruch 3, wobei der Prozessor (130) konfiguriert ist, um die zweite Distanz (Dmax) vom Fahrzeug (100) zu einem Längsendpunkt des Geradliniges-Anhalten-Sicherheitsraums (900) basierend auf Positionsinformationen des Fahrzeugs (100) und einer digitalen Karte zu berechnen.

5. Fahrzeug (100) gemäß Anspruch 4, wobei der Prozessor (130) konfiguriert ist, um eine dritte Distanz (Dint) vom Fahrzeug (100) zur Kreuzung basierend auf den Positionsinformationen des Fahrzeugs (100) und der digitalen Karte zu berechnen.

6. Fahrzeug (100) gemäß Anspruch 5, wobei der Prozessor (130) konfiguriert ist, um zu ermitteln, ob das geradlinige Anhalten möglich ist, vor dem Einfahren in die Kreuzung, basierend auf einem Ergebnis des Vergleichens einer Differenz zwischen der ersten Distanz (Dmin) zum Längsstartpunkt des Geradliniges-Anhalten-Sicherheitsraums (900) und der dritten Distanz (Dint) vom Fahrzeug (100) zur Kreuzung mit einem Referenzwert.

7. Fahrzeug (100) gemäß Anspruch 6, wobei der Prozessor (130) konfiguriert ist, um zu ermitteln, dass das geradlinige Anhalten möglich ist, vor dem Einfahren in die Kreuzung, als Reaktion darauf, dass die Differenz zwischen der ersten Distanz (Dmin) zum Längsstartpunkt des Geradliniges-Anhalten-Sicherheitsraums (900) und der dritten Distanz (Dint) vom Fahrzeug (100) zur Kreuzung kleiner als der Referenzwert ist.

8. Fahrzeug (100) gemäß Anspruch 6 oder 7, wobei der Prozessor (130) konfiguriert ist, um als Reaktion darauf, dass die Differenz zwischen der ersten Distanz (Dmin) zum Längsstartpunkt des Geradliniges-Anhalten-Sicherheitsraums (900) und der dritten Distanz (Dint) vom Fahrzeug (100) zur Kreuzung größer als der Referenzwert ist, ein Kollisionsrisiko während des Durchfahrens der Kreuzung vorherzusagen, und der Prozessor (130) konfiguriert ist, um als Reaktion darauf, dass ermittelt wird, dass kein Risiko der Kollision während des Durchfahrens der Kreuzung vorliegt, das geradlinige Anhalten nach dem Durchfahren der Kreuzung durchzuführen.

9. Fahrzeug (100) gemäß einem der Ansprüche 4-8, wobei der Prozessor (130) konfiguriert ist, um:
eine Kreuzungsdurchfahrtszeit des Fahrzeugs (100) basierend auf der ersten Geschwindigkeit des Fahrzeugs (100) und der zweiten Distanz (Dmax) zum Längsendpunkt des Geradliniges-Anhalten-Sicherheitsraums (900) zu berechnen,
basierend auf Ampelinformationen und Benachbartes-Fahrzeug-Informationen zu ermitteln, ob ein sekundäres Fahrzeug vorhanden ist, das imstande ist, in den Geradliniges-Anhalten-Sicherheitsraum (900) einzufahren,
basierend auf Benachbartes-Fahrzeug-Informationen zu ermitteln, ob ein erstes sekundäres Fahrzeug in einer seitlichen Richtung des Fahrzeugs (100) vorhanden ist, als Reaktion auf das Ermitteln, dass das sekundäre Fahrzeug imstande ist, in den Geradliniges-Anhalten-Sicherheitsraum (900) einzufahren,
basierend auf einer zweiten Geschwindigkeit des ersten sekundären Fahrzeugs und einer vierten Distanz von dem ersten sekundären Fahrzeug zu dem Geradliniges-Anhalten-Sicherheitsraum (900) eine Einfahrzeit des ersten sekundären Fahrzeugs in den Geradliniges-Anhalten-Sicherheitsraum (900) zu berechnen, als Reaktion auf das Ermitteln, dass sich das erste sekundäre Fahrzeug in einer seitlichen Richtung des Fahrzeugs (100) befindet, und
zu ermitteln, ob das geradlinige Anhalten durchzuführen ist, nachdem das Fahrzeug (100) durch die Kreuzung hindurchfährt, basierend auf einem Ergebnis eines Vergleichens der Kreuzungsdurchfahrtszeit des Fahrzeugs (100) mit der Einfahrzeit des ersten sekundären Fahrzeugs in den Geradliniges-Anhalten-Sicherheitsraum (900).

10. Fahrzeug (100) gemäß Anspruch 9, wobei der Prozessor (130) konfiguriert ist, um das geradlinige Anhalten durchzuführen, nachdem das Fahrzeug (100) durch die Kreuzung hindurchfährt, als Reaktion darauf, dass die Kreuzungsdurchfahrtszeit des Fahrzeugs (100) kleiner als die Einfahrzeit des ersten sekundären Fahrzeugs in den Geradliniges-Anhalten-Sicherheitsraum (900) ist.

11. Fahrzeug (100) gemäß Anspruch 9 oder 10, wobei der Prozessor (130) konfiguriert ist, um als Reaktion darauf, dass die Kreuzungsdurchfahrtszeit des Fahrzeugs (100) größer als die Einfahrzeit des ersten sekundären Fahrzeugin in den Geradliniges-Anhalten-Sicherheitsraum (900) ist, das geradlinige Anhalten des Fahrzeugs (100) innerhalb der Kreuzung durchzuführen.

12. Verfahren zum Betreiben eines Fahrzeugs (100), aufweisend:
Erhalten von Umgebungsinformationen durch Erfassen einer Umgebung des Fahrzeugs (100) während eines autonomen Fahrens des Fahrzeugs (100),
Erhalten von Fahrzeugzustandsinformationen durch Überwachen eines Zustands des Fahrzeugs (100) während des autonomen Fahrens des Fahrzeugs (100),
Ermitteln, ob ein Minimales-Risiko-Manöver durchzuführen ist, basierend auf mindestens einem von den Umgebungsinformationen oder den Fahrzeugzustandsinformationen während des autonomen Fahrens des Fahrzeugs (100),
Ermitteln eines Minimales-Risiko-Manöver-Typs als Reaktion auf das Ermitteln, dass ein Minimales-Risiko-Manöver durchzuführen ist, und
Vorhersagen eines Geradliniges-Anhalten-Sicherheitsraums (900) als Reaktion auf das Ermitteln, dass der Minimales-Risiko-Manöver-Typ ein geradliniges Anhalten innerhalb einer Kreuzung ist,
wobei der Geradliniges-Anhalten-Sicherheitsraum (900) durch eine seitliche Länge des Geradliniges-Anhalten-Sicherheitsraums (900), eine erste Distanz (Dmin) von dem Fahrzeug (100) zu einem Längsstartpunkt des Geradliniges-Anhalten-Sicherheitsraums (900) und eine zweite Distanz (Dmax) vom Fahrzeug (100) zu einem Längsendpunkt des Geradliniges-Anhalten-Sicherheitsraums (900) vorhergesagt wird.

13. Verfahren gemäß Anspruch 12, ferner aufweisend:
nach dem Vorhersagen des Geradliniges-Anhalten-Sicherheitsraums (900) Ermitteln, ob das geradlinige Anhalten möglich ist, bevor in die Kreuzung eingefahren wird, basierend auf einem Ergebnis eines Vergleichens einer Differenz zwischen der ersten Distanz (Dmin) zum Längsstartpunkt des Geradliniges-Anhalten-Sicherheitsraums (900) und einer dritten Distanz (Dint) vom Fahrzeug (100) zur Kreuzung mit einem Referenzwert.

14. Verfahren gemäß Anspruch 13, ferner aufweisend, nach dem Ermitteln, ob ein geradliniges Anhalten möglich ist, vor dem Einfahren in die Kreuzung, ein Vorhersagen eines Kollisionsrisikos während des Durchfahrens der Kreuzung, als Reaktion darauf, dass die Differenz zwischen der ersten Distanz (Dmin) zum Längsstartpunkt des Geradliniges-Anhalten-Sicherheitsraums (900) und der dritten Distanz (Dint) vom Fahrzeug (100) zur Kreuzung größer als der Referenzwert ist.

15. Verfahren gemäß Anspruch 14, ferner aufweisend, nach dem Vorhersagen des Kollisionsrisikos während des Durchfahrens der Kreuzung, das Ermitteln, ob das geradlinige Anhalten möglich ist, nachdem das Fahrzeug (100) durch die Kreuzung hindurchgefahren ist, basierend auf einem Ergebnis eines Vergleichens einer Kreuzungsdurchfahrtszeit des Fahrzeugs (100) mit einer Einfahrzeit eines ersten sekundären Fahrzeugs in den Geradliniges-Anhalten-Sicherheitsraum (900).

## Revendications

1. Véhicule (100) capable de fonctions de conduite autonome, le véhicule (100) comprenant :
au moins un capteur (1) configuré pour détecter un environnement du véhicule (100) et pour générer des informations d'environnement ;
un processeur (130) configuré pour surveiller un état du véhicule (100) afin de générer des informations d'état de véhicule et pour déterminer s'il convient d'effectuer une manœuvre à risque minimal sur la base d'au moins l'une parmi les informations d'environnement ou les informations d'état de véhicule pendant une conduite autonome du véhicule (100) ; et
un contrôleur (120) configuré pour commander un fonctionnement du véhicule (100) conformément au contrôle du processeur (130), dans lequel le processeur (130) est configuré pour déterminer un type de manœuvre à risque minimal en réponse à la détermination d'effectuer ladite manœuvre à risque minimal et pour prédire un espace d'admission pour un arrêt en ligne droite (900) ainsi qu'un risque de collision en réponse au fait que le type de manœuvre à risque minimal déterminé corresponde à un arrêt en ligne droite au sein d'une intersection,
dans lequel l'espace d'admission pour un arrêt en ligne droite (900) est prédit par une longueur latérale de l'espace d'admission pour un arrêt en ligne droite (900), une première distance (Dmin) du véhicule (100) à un point de départ longitudinal de l'espace d'admission pour un arrêt en ligne droite (900), et une deuxième distance (Dmax) du véhicule (100) à un point d'extrémité longitudinal de l'espace d'admission pour un arrêt en ligne droite (900).

2. Véhicule (100) selon la revendication 1, dans lequel le processeur (130) est configuré pour calculer la longueur latérale de l'espace d'admission pour un arrêt en ligne droite (900) sur la base d'une largeur de voie et d'une valeur maximale admissible de voie.

3. Véhicule (100) selon la revendication 1 ou 2, dans lequel le processeur (130) est configuré pour calculer la première distance (Dmin) du véhicule (100) à un point de départ longitudinal de l'espace d'admission pour un arrêt en ligne droite (900) sur la base d'une première vitesse du véhicule (100) et d'une décélération maximale.

4. Véhicule (100) selon la revendication 3, dans lequel le processeur (130) est configuré pour calculer la deuxième distance (Dmax) du véhicule (100) à un point d'extrémité longitudinal de l'espace d'admission pour un arrêt en ligne droite (900) en fonction d'informations de position du véhicule (100) et d'une carte numérique.

5. Véhicule (100) selon la revendication 4, dans lequel le processeur (130) est configuré pour calculer une troisième distance (Dint) du véhicule (100) à l'intersection sur la base des informations de position du véhicule (100) et de la carte numérique.

6. Véhicule (100) selon la revendication 5, dans lequel le processeur (130) est configuré pour déterminer si l'arrêt en ligne droite est possible avant d'entrer dans l'intersection, sur la base d'un résultat de comparaison d'une différence entre la première distance (Dmin) par rapport au point de départ longitudinal de l'espace d'admission pour un arrêt en ligne droite (900) et la troisième distance (Dint) du véhicule (100) à l'intersection, et d'une valeur de référence.

7. Véhicule (100) selon la revendication 6, dans lequel, en réponse au fait que la différence entre la première distance (Dmin) jusqu'au point de départ longitudinal de l'espace d'admission pour un arrêt en ligne droite (900) et la troisième distance (Dint) du véhicule (100) à l'intersection est inférieure à la valeur de référence, le processeur (130) est configuré pour déterminer que l'arrêt en ligne droite est possible avant d'entrer dans l'intersection.

8. Véhicule (100) selon la revendication 6 ou 7, dans lequel, en réponse au fait que la différence entre la première distance (Dmin) par rapport au point de départ longitudinal de l'espace d'admission pour un arrêt en ligne droite (900) et la troisième distance (Dint) du véhicule (100) à l'intersection est supérieure à la valeur de référence, le processeur (130) est configuré pour prédire un risque de collision lors du passage de l'intersection, et en réponse à la détermination qu'il n'y a aucun risque de collision lors du passage de l'intersection, le processeur (130) est configuré pour effectuer l'arrêt en ligne droite après avoir passé l'intersection.

9. Véhicule (100) selon l'une des revendications 4 à 8, dans lequel le processeur (130) est configuré pour :
calculer un temps de passage d'intersection du véhicule (100) sur la base de la première vitesse du véhicule (100) et de la deuxième distance (Dmax) par rapport au point d'extrémité longitudinal de l'espace d'admission pour un arrêt en ligne droite (900) ;
déterminer s'il existe un véhicule secondaire capable d'entrer dans l'espace d'admission pour un arrêt en ligne droite (900) sur la base d'informations de feux de signalisation et d'informations de véhicule voisin ;
déterminer s'il existe un premier véhicule secondaire dans une direction latérale du véhicule (100) sur la base d'informations de véhicule voisin, en réponse à la détermination que le véhicule secondaire est capable d'entrer dans l'espace d'admission pour un arrêt en ligne droite (900) ;
calculer un temps d'entrée du premier véhicule secondaire dans l'espace d'admission pour un arrêt en ligne droite (900) sur la base d'une deuxième vitesse du premier véhicule secondaire et d'une quatrième distance du premier véhicule secondaire à l'espace d'admission pour un arrêt en ligne droite (900), en réponse à la détermination que le premier véhicule secondaire se trouve dans une direction latérale du véhicule (100) ; et
déterminer s'il convient d'effectuer l'arrêt en ligne droite après que le véhicule (100) a franchi l'intersection, sur la base d'un résultat de comparaison du temps de passage d'intersection du véhicule (100) et du temps d'entrée du premier véhicule secondaire dans l'espace d'admission pour un arrêt en ligne droite (900).

10. Véhicule (100) selon la revendication 9, dans lequel, en réponse au fait que le temps de passage d'intersection du véhicule (100) est inférieur au temps d'entrée du premier véhicule secondaire dans l'espace d'admission pour un arrêt en ligne droite (900), le processeur (130) est configuré pour effectuer l'arrêt en ligne droite après que le véhicule (100) a franchi l'intersection.

11. Véhicule (100) selon la revendication 9 ou 10, dans lequel, en réponse au fait que le temps de passage d'intersection du véhicule (100) est supérieur au temps d'entrée du premier véhicule secondaire dans l'espace d'admission pour un arrêt en ligne droite (900), le processeur (130) est configuré pour effectuer l'arrêt en ligne droite du véhicule (100) à l'intérieur de l'intersection.

12. Procédé d'opération d'un véhicule (100), comprenant :
l'obtention d'informations d'environnement en détectant un environnement du véhicule (100) pendant une conduite autonome du véhicule (100) ;
l'obtention d'informations d'état de véhicule par surveillance d'un état du véhicule (100) pendant la conduite autonome du véhicule (100) ;
la détermination s'il convient d'effectuer une manœuvre à risque minimal sur la base d'au moins l'une parmi les informations d'environnement ou les informations d'état de véhicule pendant la conduite autonome du véhicule (100) ;
la détermination d'un type de manœuvre à risque minimal, en réponse à la détermination d'effectuer ladite manœuvre à risque minimal ; et
la prévision d'un espace d'admission pour un arrêt en ligne droite (900), en réponse au fait que la détermination du type de manœuvre à risque minimal est un arrêt en ligne droite à l'intérieur d'une intersection,
dans lequel l'espace d'admission pour un arrêt en ligne droite (900) est prédit par une longueur latérale de l'espace d'admission pour un arrêt en ligne droite (900), une première distance (Dmin) du véhicule (100) à un point de départ longitudinal de l'espace d'admission pour un arrêt en ligne droite (900), et une deuxième distance (Dmax) du véhicule (100) à un point d'extrémité longitudinal de l'espace d'admission pour un arrêt en ligne droite (900).

13. Procédé selon la revendication 12, comprenant en outre :
après la prévision de l'espace d'admission pour un arrêt en ligne droite (900), la détermination de la possibilité de l'arrêt en ligne droite avant d'entrer dans l'intersection, sur la base d'un résultat d'une comparaison d'une différence entre la première distance (Dmin) jusqu'au point de départ longitudinal de l'espace d'admission pour un arrêt en ligne droite (900) et une troisième distance (Dint) du véhicule (100) à l'intersection, et une valeur de référence.

14. Procédé selon la revendication 13, comprenant en outre, après la détermination de la possibilité de l'arrêt en ligne droite avant d'entrer dans l'intersection, la prévision d'un risque de collision lors du passage de l'intersection, en réponse au fait que la différence entre la première distance (Dmin) par rapport au point de départ longitudinal de l'espace d'admission pour un arrêt en ligne droite (900) et la troisième distance (Dint) du véhicule (100) à l'intersection est supérieure à la valeur de référence.

15. Procédé selon la revendication 14, comprenant en outre, après la prévision du risque de collision lors du passage de l'intersection, la détermination de la possibilité de l'arrêt en ligne droite après que le véhicule (100) a franchi l'intersection, sur la base d'un résultat d'une comparaison d'un temps de passage d'intersection du véhicule (100) et d'un temps d'entrée d'un premier véhicule secondaire dans l'espace d'admission pour un arrêt en ligne droite (900) .
